# EUROPEAN PATENT APPLICATION

(11) **EP 4 749 435 A1**
(43) Date of publication of application: **27.05.2026**
(21) Application number: 25210218.1
(22) Date of filing: 21.10.2025
(51) Int. Cl.: G06F 9/30, G06F 9/32

(54) **RESTRICTING INDIRECT CONTROL FLOW TRANSFERS BASED ON COMPATIBILITY OF THE INSTRUCTION POINTERS OF THE INDIRECT CONTROL FLOW TRANSFER INSTRUCTION AND THE TARGET INSTRUCTION**

(30) Priority: 25.11.2024 US 202418959583
(71) Applicant: INTEL Corporation, Santa Clara, CA 95054 (US)
(72) Inventor: CONSTABLE, Scott, Portland, 97229 (US); NUZMAN, Joseph, 34381 Haifa (IL); WIEDEMEIER, Jeffrey G., Austin, 78737 (US); UNTERLUGGAUER, Thomas, 9580 Villach (AT); LIU, Fangfei, Hillsboro, 97124 (US)
(74) Representative: HGF

(57) **Abstract**

A processor of an aspect includes a decode unit to decode an indirect control flow transfer instruction, the instruction to indicate a register that is to store information to indicate an instruction pointer of a target instruction. An execution unit is to perform operations corresponding to the instruction, including to determine whether at least a first set of bits of an instruction pointer of the indirect control flow transfer instruction are compatible with at least a second set of bits of the instruction pointer of the target instruction. The operations also include to either store the instruction pointer of the target instruction in an instruction pointer storage if the first and second sets of bits are determined to be compatible, or to not store the instruction pointer of the target instruction in the instruction pointer storage if the first and second sets of bits are determined to not be compatible.

## Description

### BACKGROUND

### Technical Field

Embodiments described herein generally relate to processors. In particular, embodiments described herein generally relate to control flow transfers in processors.

### Background Information

Two known types of control flow integrity (CFI) attacks are jump-oriented programming (JOP) attacks and call-oriented programming (COP) attacks. The JOP and COP attacks commonly involve manipulating a program's indirect jump or indirect call instructions to hijack a program's control flow. Initially, an attacker may exploit a vulnerability, such as, for example, buffer overflow, use-after-free, or the like, to write an attacker-chosen value to the program's memory or into a register. Then, the COP or JOP attack may involve use of this attacker-chosen value by an indirect jump or indirect call instruction, which may jump or branch to a location chosen by the attacker. This location may contain a gadget (e.g., one or more instructions) that is able to perform a certain functionality desired by the attacker. Often, additional indirect jump or indirect call instructions may be used to jump or branch to additional attacker chosen locations to string together a series of gadgets. These gadgets may be used to extract passwords or other secrets, elevate privilege, or otherwise cause harm.

### BRIEF DESCRIPTION OF THE DRAWINGS

Various examples in accordance with the present disclosure will be described with reference to the drawings, in which:
**FIG. 1** is a block diagram of an embodiment of a processor that is operative to perform an embodiment of an indirect control flow transfer instruction.
**FIG. 2** is a block flow diagram of an embodiment of a method of performing an embodiment of an indirect control flow transfer instruction.
**FIG. 3** is a block diagram of one example embodiment of logic to determine whether a first set of bits of an instruction pointer of an indirect control transfer instruction are compatible with a second set of bits of an instruction pointer of a target instruction of the indirect control flow transfer instruction.
**FIG. 4** is a block diagram of a first example embodiment of an indirect control flow transfer instruction.
**FIG. 5** is a block diagram of a second example embodiment of an indirect control flow transfer instruction.
**FIG. 6** is a block diagram of a third example embodiment of an indirect control flow transfer instruction.
**FIG. 7** is a block diagram of a fourth example embodiment of an indirect control flow transfer instruction.
**FIG. 8** is a block diagram of an example embodiment of a check tag instruction and a fifth example embodiment of an indirect control flow transfer instruction.
**FIG. 9** illustrates a detailed example embodiment of one possible software use case that may utilize one or more embodiments of restricting indirect control flow transfers based on compatibility of instruction pointers as disclosed herein.
**FIG. 10A** is a block diagram of a detailed example embodiment of a mask suitable for the possible software use case of **FIG. 9****.**
**FIG. 10B** is a block diagram of a specific illustrative detailed example embodiment of a mask suitable for the possible software use case of **FIG. 9****.**
**FIG. 12** is a block diagram of an embodiment of a processor that is operative to allow or restrict speculative execution at a predicted target instruction based on compatibility of instruction pointers of the target instruction and its indirect control flow transfer instruction.
**FIG. 13** illustrates an example computing system.
**FIG. 14** illustrates a block diagram of an example processor and/or System on a Chip (SoC) that may have one or more cores and an integrated memory controller.
**FIG. 15(A)** is a block diagram illustrating both an example in-order pipeline and an example register renaming, out-of-order issue/execution pipeline according to examples.
**FIG. 15(B)** is a block diagram illustrating both an example in-order architecture core and an example register renaming, out-of-order issue/execution architecture core to be included in a processor according to examples.
**FIG. 16** illustrates examples of execution unit(s) circuitry.
**FIG. 17** is a block diagram of a register architecture according to some examples.
**FIG. 18** illustrates examples of an instruction format.
**FIG. 19** illustrates examples of an addressing information field.
**FIG. 20** illustrates examples of a first prefix.
**FIGS. 21(A)****-(D)** illustrate examples of how the R, X, and B fields of the first prefix in **FIG. 20** are used.
**FIGS. 22(A)****-(B)** illustrate examples of a second prefix.
**FIG. 23** illustrates examples of a third prefix.
**FIG. 24** is a block diagram illustrating the use of a software instruction converter to convert binary instructions in a source instruction set architecture to binary instructions in a target instruction set architecture according to examples.

### DETAILED DESCRIPTION OF EMBODIMENTS

Disclosed herein are processors, methods, systems, instructions, and machine-readable mediums to restrict indirect control flow transfers based on compatibility of an instruction pointer of an indirect control flow transfer instruction and an instruction pointer of a target instruction. In the following description, numerous specific details are set forth (e.g., specific instruction operations, instruction formats, mask configurations, jump table layouts, processor configurations, microarchitectural details, sequences of operations, etc.). However, embodiments may be practiced without these specific details. In other instances, well-known circuits, structures, and techniques have not been shown in detail to avoid obscuring the understanding of the description.

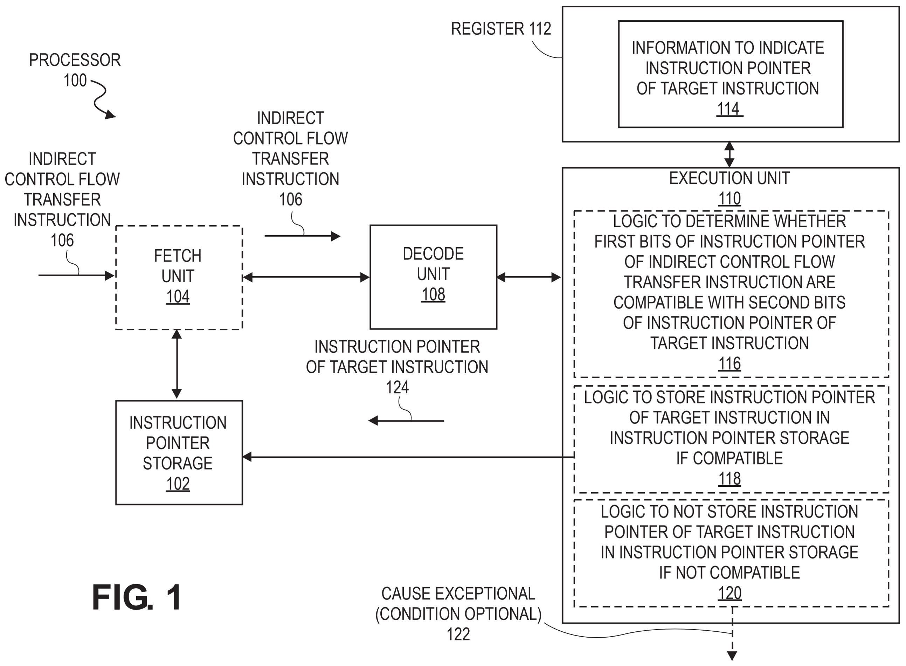

**FIG. 1** is a block diagram of an embodiment of a processor 100 that is operative to perform an embodiment of an indirect control flow transfer instruction 106. In some embodiments, the processor may be a general-purpose processor (e.g., a general-purpose microprocessor or central processing unit (CPU) of the type used in desktop, laptop, or other computers). Alternatively, the processor may be a special-purpose processor. Examples of suitable special-purpose processors include, but are not limited to, graphics processors, network processors, communications processors, cryptographic processors, co-processors, embedded processors, digital signal processors (DSPs), and controllers (e.g., microcontrollers). The processor may have any of various complex instruction set computing (CISC) architectures, reduced instruction set computing (RISC) architectures, very long instruction word (VLIW) architectures, hybrid architectures, or other types of architectures. In some embodiments, the processor may include (e.g., be disposed on) at least one integrated circuit or semiconductor die. In some embodiments, the processor may include at least some hardware (e.g., transistors, circuitry, non-volatile memory storing circuit-level instructions and/or control signals, or the like).

The processor includes an instruction pointer storage 102. The instruction pointer storage is sometimes referred to simply as an instruction pointer or a program counter. The instruction pointer storage is commonly implemented as a special-purpose register or other type of storage. The instruction pointer storage may be operative to store instruction pointers of instructions to be executed by the processor. The instruction pointers may represent memory addresses or values indicating locations in system memory where the instructions are stored.

The processor includes a fetch unit 104 coupled with the instruction pointer storage. The fetch unit may be operative to fetch (e.g., obtain, retrieve, or otherwise receive) instructions (e.g., from one or more caches or system memory) to be executed by the processor. The fetch unit may fetch the indirect control flow transfer instruction. By way of example, the fetch unit may fetch the indirect control flow transfer instruction when the instruction pointer of the indirect control flow transfer instruction is stored in the instruction pointer storage.

The indirect control flow transfer instruction may represent a macroinstruction, machine code instruction, or other instruction or control signal of an instruction set of the processor. The indirect control flow transfer instruction may cause, or at least attempt to cause, the processor to perform a control flow transfer operation (e.g., jump to a different instruction pointer, branch to a different instruction pointer, call a subroutine at a different instruction pointer, etc.). Examples of suitable types of the indirect control flow transfer instruction include, but are not limited to indirect jump instructions, indirect branch instructions, computed jump instructions, computed branch instructions, register-indirect jump instructions, register-indirect branch instructions, branch with link to register instructions, indirect call instructions, and the like.

The processor includes a decode unit 108 (e.g., decode circuitry). The decode unit may be coupled with the instruction fetch unit to receive the indirect control flow transfer instruction. The decode unit may be operative to decode the indirect control flow transfer instruction. The decode unit may output one or more lower-level decoded instructions or control signals (e.g., one or more microinstructions, micro-operations, micro-code entry points, etc.), which reflect, represent, and/or are derived from the higher-level indirect control flow transfer instruction. In some embodiments, the decode unit may include at least one input structure (e.g., a port, interconnect, or interface) coupled to receive the indirect control flow transfer instruction, an instruction recognition and decode logic coupled therewith to recognize and decode the indirect control flow transfer instruction, and at least one output structure (e.g., a port, interconnect, or interface) coupled therewith to output the lower-level instruction(s) or control signal(s). The decode unit and/or its instruction recognition and decode logic may be implemented using various instruction decode mechanisms including, but not limited to, microcode read only memories (ROMs), look-up tables, hardware implementations, programmable logic arrays (PLAs), other mechanisms suitable to implement decode units, and combinations thereof. In some embodiments, the decode unit may include at least some hardware (e.g., one or more of transistors, integrated circuitry, on-die read-only memory or other non-volatile memory storing microcode or other hardware-level instructions, etc.). In some embodiments, the decode unit may be included on a die, integrated circuit, or semiconductor substrate.

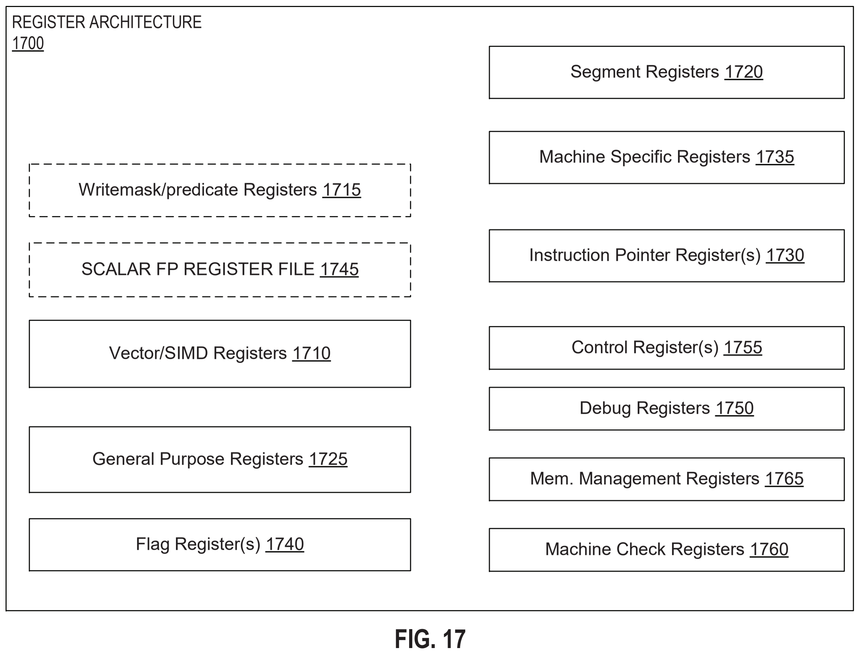

The indirect control flow transfer instruction may explicitly specify (e.g., through one or more fields or a set of bits), or otherwise indicate (e.g., implicitly indicate), a register 112 (e.g., a general-purpose register) that is to store either information 114 to indicate an instruction pointer of a target instruction of the indirect control flow transfer instruction or information to indicate a location in system memory storing information to indicate the instruction pointer of the target instruction. In some cases, the information 114 in the register may be the instruction pointer (e.g., the effective address) of the target instruction. In other cases, the information 114 in the register may not be the instruction pointer (e.g., the effective address) of the target instruction but may be used to generate the instruction pointer (e.g., the effective address) of the target instruction. As one example, the indirect control flow transfer instruction may have a source register specification field to specify the register. As another example, the register may be implicit to the indirect control flow transfer instruction (e.g., implicit to an opcode of the instruction) such that the instruction does not need to have a field to specify it. The indirect control flow transfer instruction is referred to as indirect since it specifies the register (or some other storage location) that stores the information to indicate the instruction pointer of the target instruction as opposed to specifying the information to indicate the instruction pointer of the target instruction directly. The register 112 may represent an architecturally visible or architectural register that is visible to software and/or a programmer and/or is a register that can be indicated by instructions of the instruction set of the processor to identify operands. The register may be implemented in different ways in different microarchitectures and is not limited to any particular type of design. Examples of suitable types for the register include, but are not limited to, a dedicated physical register and a dynamically allocated physical register using register renaming. In one embodiment, the register may be one of the general-purpose registers 1725 of **FIG. 17****.**

Referring again to **FIG. 1****,** an execution unit 110 (e.g., execution circuitry) is coupled with the decode unit 108 and the register 112. By way of example, the execution unit may represent a branch unit, a branch execution unit, a jump unit, a jump execution unit, a control flow transfer execution unit, or the like. In some embodiments, the execution unit may be on a die or integrated circuit (e.g., on die or integrated circuit with the decode unit). The execution unit may be coupled to receive the one or more decoded or otherwise converted instructions or control signals that represent and/or are derived from the indirect control flow transfer instruction. The execution unit may also be coupled to receive the information to indicate the instruction pointer of the target instruction. The execution unit may be operative in response to and/or due to the indirect control flow transfer instruction (e.g., in response to the one or more decoded or otherwise converted instructions or control signals) to perform operations corresponding to the indirect control flow transfer instruction.

In some embodiments, the execution unit and/or the processor may be operative to determine whether at least a first set of bits (e.g., a subset of all bits) of an instruction pointer of the indirect control flow transfer instruction are compatible with at least a second set of bits (e.g., a subset of all bits) of the instruction pointer of the target instruction. As shown, in some embodiments, the execution unit may optionally include circuitry or other logic 116 to make this determination. Note that the compatibility determination is based on both the first set of bits of the instruction pointer of the indirect control flow transfer instruction and the second set of bits of the instruction pointer of the target instruction (e.g., not just the second set of bits of the instruction pointer of the target instruction). In some embodiments, the compatibility of the first and second sets of bits may encode, define, or designate the intended and/or valid target locations in the program where the control flow transfer instruction is allowed to transfer control flow to. Correspondingly, the lack of compatibility of the first and second sets of bits may represent unintended and/or invalid target locations in the program where the control flow transfer instruction is not allowed to transfer control flow to.

In some embodiments, the first and second sets of bits may be selected by, indicated by, or otherwise based on a mask. The mask may have bits of a first value (e.g., binary one) to select or indicate bits of the instruction pointers as the first and second sets of bits and bits of a second value (e.g., binary zero) to exclude bits of the instruction pointers from the first and second sets of bits. In some embodiments, the indirect control flow transfer instruction may specify the mask (e.g., have an immediate to specify the mask). In other embodiments, the processor may have a register (e.g., a model specific register (MSR), a user-accessible register, a special-purpose register, a control and/or configuration register, a general-purpose register, or the like) to store the mask. In some such embodiments, it may be implicit to the indirect control flow transfer instruction that the mask is to be obtained from the register without the instruction needing to have a field to specify the register. In other such embodiments, for example in the case of the register being a general-purpose register, the instruction may optionally have a field to specify the register. The masks in such registers may optionally be saved and restored on context switches similar to other state. In embodiments where a new dedicated or special purpose register is used to store the masks, new instructions may optionally be added to the instruction set to write masks to and/or read masks from the new dedicated or special purpose register. In still other embodiments, the instruction may optionally have, specify, or otherwise indicate a mask selector to select one of multiple masks. For example, the instruction could have a field (e.g., a two or three bit field), an immediate (e.g., a two or three bit immediate), or a prefix, that represents a mask selector. As one specific example, there could be a two bit field or immediate to select any one of four different masks. For example, there could be a set of two, three, four, or more mask registers that may be programmed with or store different masks. Or, instead of storing the masks, these registers may store indexes that may be used to index into a table or other data structure having multiple masks in order to select the mask. By way of example, the different masks may be used to support different table sizes, different numbers of tables per type, or other different use cases.

The first and second sets of bits may be compatible in different ways in different embodiments. In some embodiments, the first and second sets of bits may occupy the same bit positions in the instruction pointers and may be compatible if and only if they are equal or match. In such cases, the first and second sets of bits may be compared for equality and if they are found to be equal the determination may be that the first and second sets of bits are compatible. In other embodiments, the first and second sets of bits may be compatible if they are compatible through one or more functions or operations applied to the first and second sets of bits and/or a function applied to the instruction pointers of the indirect control flow transfer instruction and the target instruction. For example, the instruction pointers of the indirect control flow transfer instruction and the target instruction may be input to a function and an output of the function may be either that the two instruction pointers and/or the first and second sets of bits are compatible or are not compatible. Examples of suitable functions or operations include, but are not limited to, logical operations (e.g., logical AND, logical OR, logical exclusive OR (XOR), combinations thereof, etc.), cryptographic functions, mathematical functions, transformations, or the like. In other embodiments, compatibility may be based on whether or not the attempted control flow transfer is to the target instruction pointer that is too far from the instruction pointer of the indirect control flow transfer instruction (e.g., based on a comparison with a maximum or threshold delta or distance between the instruction pointers). In still other embodiments, compatibility may be based on whether or not the attempted control flow transfer is to the target instruction pointer that is within a valid range (e.g., as defined by range registers, a corresponding range in a table or other data structure of ranges, etc.). Combinations of such approaches may also optionally be used to determine compatibility.

In some embodiments, the execution unit and/or the processor may be operative to store 124 the instruction pointer of the target instruction in the instruction pointer storage 102 if the first and second sets of bits are determined to be compatible. As shown, in some embodiments, the execution unit may optionally include circuitry or other logic 118 to do this. .] This may cause the control flow transfer to the target instruction to take place. Note that if the target instruction determined at execution time does not match the predicted target instruction, then instructions younger than the indirect control flow transfer instruction may be squashed as is commonly done.

In some embodiments, the execution unit and/or the processor may be operative to not store the instruction pointer of the target instruction in the instruction pointer storage if the first and second sets of bits are determined to not be compatible. As shown, in some embodiments, the execution unit may optionally include circuitry or other logic 120 to do this. This may represent not allowing and/or preventing and/or restricting the control flow transfer to the target instruction from taking place. In some embodiments, the execution unit and/or the processor may be operative to raise or otherwise cause an exceptional condition if the first and second sets of bits are determined to not be compatible. As used herein, the term "exceptional condition" refers broadly to various types of exceptional conditions that may occur while processing instructions. Examples of such exceptional conditions include, but are not limited to, exceptions, faults, control flow violations, and the like. Specific examples of suitable exceptional conditions include, but are not limited to, control flow exceptions or faults, control protection exceptions or faults, and the like. Commonly, the exceptional condition may cause a control transfer to a handler routine.

Accordingly, the indirect control flow transfer instruction may be operable to control or otherwise cause the execution unit and/or the processor to be restrictive or limiting with regard to which target instructions and/or which target locations and/or which instruction pointers the indirect control flow transfer instruction is allowed to transfer control flow to. Advantageously, this may help to enforce or enhance control flow integrity and/or help to prevent COP and JOP attacks (or at least make launching them more difficult). By way of example, the COP and JOP attacks may be detected and prevented by the exceptional condition, which may alert the application, the operating system, or other supervisory software, that a forward-edge CFI violation has occurred. As another example, this may help to avoid speculative type confusion. Speculative type confusion (also known as resolve-time Branch Target Injection (BTI)) may occur when an older mis-prediction causes an architecturally incorrect value to be written to the branch target operand, and the branch instruction executes before the older mis-prediction is detected and squashed by the processor. In some embodiments, such speculative type confusion may be mitigated, since control flow transfers do not occur to instruction pointers of target instructions that are not compatible with the instruction pointers of the control flow transfer instructions.

Advantageously, in some embodiments, the information used to determine the validity or invalidity of the attempted control flow transfer is encoded, provided, or available at the control flow transfer site and/or at the control flow transfer instruction. For example, the mask may be specified in an immediate of the indirect control flow transfer instruction or in a register indicated by the indirect control flow transfer instruction and the instruction pointer of the target instruction can be in a register indicated by the indirect control flow transfer instruction. This allows the validity or invalidity of the attempted control flow transfer to be evaluated more quickly.

In contrast, various other control flow integrity approaches are based on other actions that introduce latency and delay the evaluation of whether the attempted control flow transfer is valid or invalid. As one example, another possible approach to determine valid and invalid indirect control flow transfers is based on the need for a particular type of instruction (e.g., a particular opcode) to be the target instruction. This particular type of instruction represents a valid landing pad for an indirect control flow transfer whereas other instructions are not valid landing pads for the indirect control flow transfer. As one example, Intel's Control-Flow Enforcement Technology Indirect Brance Tracking (CET-IBT) uses ENDBR32 or ENDBR64 instructions as the valid landing pad instructions. As another example, ARM's FEAT_BTI, Branch Target Identification, uses BTI instructions as the valid landing pad instructions for indirect branches. One drawback with such approaches is that it takes additional time to fetch and decode the target instructions (e.g., their opcodes) to know whether they are valid landing pad instructions (e.g., whether they are ENDBR32/ENDBR64 instructions for CET-IBT or BTI instructions for FEAT_BTI) or invalid landing pad instructions. As another example, ARM's FEAT_PAuth uses pointer authentication codes. For example, at the start of a function the return address in the link register is signed by inserting a pointer authentication code (PAC) in the upper order unused address bits of the register. The PAC is generated based on the pointer, a cryptographic key, and sometimes a modifier (e.g., a stack pointer, another register). Before returning to the return address due to a return instruction, the return address is authenticated using the PAC (e.g., a new PAC is generated that should match the PAC in the return address and the two are compared for equality). Note that the PACs are confined to the upper most significant bits not used for actual addressing of memory. One drawback with such approaches is that it takes additional time to load data, generate a comparison PAC, and check the PACs. Such additional latencies tend to expose greater risk to microarchitectural vulnerabilities colloquially often referred to as Spectre (e.g., branch target injection, branch history injection, etc.) that are artifacts of the behavior of the indirect branch predictor in the processor.

Technologies such as CET-IBT are also "coarse grained" in a sense that they use a single criteria to determine whether a forward-edge transfer is valid. Specifically, the target of a call or jump is valid if it has an ENDBR32/ENDBR64. This coarse-grained approach does not allow the programmer or software to define the set of valid targets for a given jump or call as a proper subset of all potential targets within a program. In contrast, embodiments disclosed herein may be regarded as more "fine grained" in the sense that they may allow the programmer or software to define subsets of valid indirect control flow transfers by laying out the program in a certain manner (e.g., using jump tables as will be discussed further below) and configuring the compatibility criteria (e.g., defining the mask).

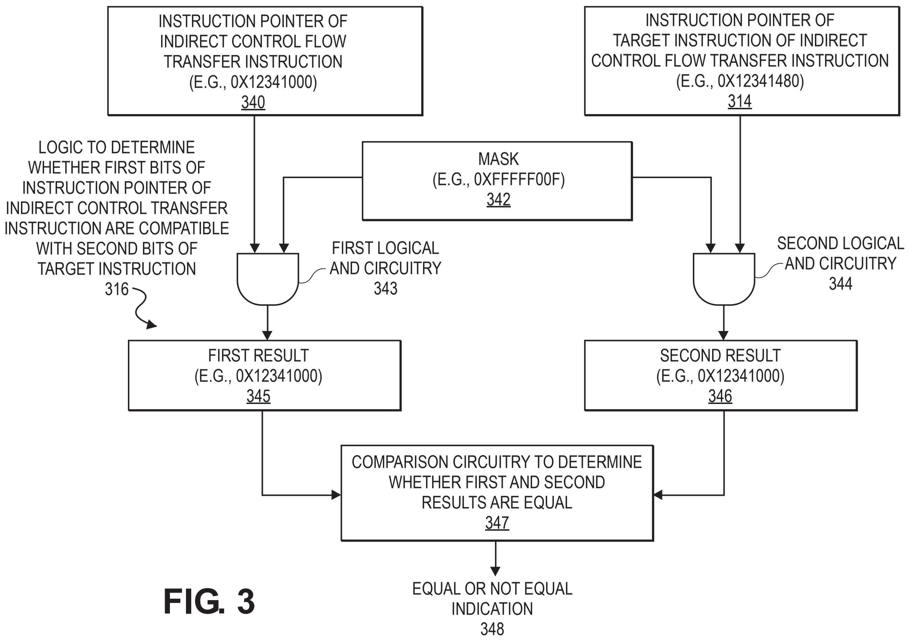

The execution unit and/or the processor may include specific or particular logic (e.g., transistors, integrated circuitry, or other hardware potentially combined with firmware (e.g., instructions stored in non-volatile memory) and/or software) that is operative to perform the operations corresponding to the indirect control flow transfer instruction. In some embodiments, the execution unit may include one or more input structures (e.g., a port, interconnect, or interface) coupled to receive source operands, circuitry or logic coupled therewith to perform the operations of the indirect control flow transfer instruction described above, and one or more output structures (e.g., a port, interconnect, or interface) coupled therewith to output the instruction pointer of the target instruction. In some embodiments, the execution unit may include the circuitry or logic shown and described for FIG. 3, although the scope of the invention is not so limited.

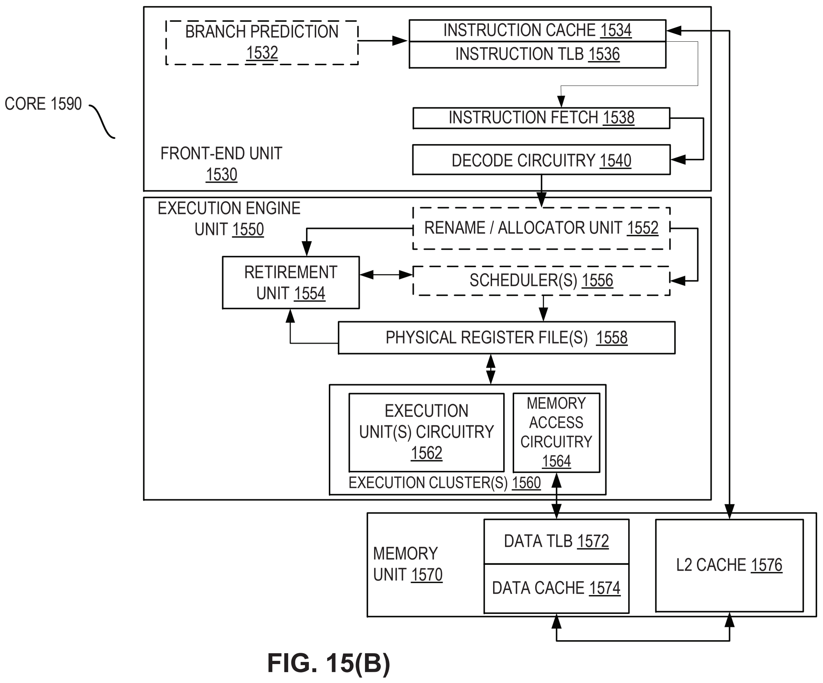

To avoid obscuring the description, a simple processor 100 has been shown and described. However, the processor may optionally include other processor components. For example, various embodiments may include various combinations and configurations of the components shown and described for any of FIGs. 15B, FIG. 16, and/or FIG. 17. All the components of the processor may be coupled together to allow them to operate as intended.

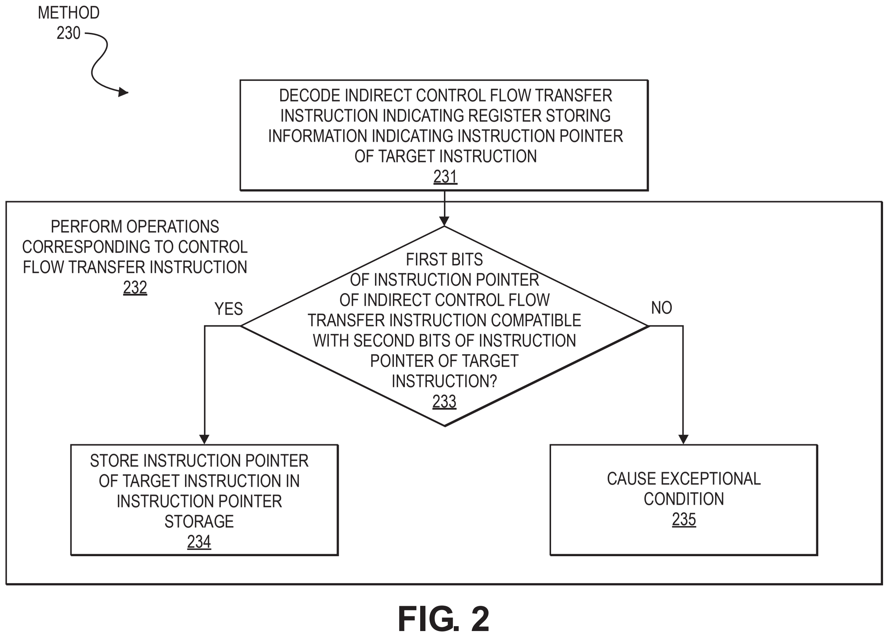

**FIG. 2** is a block flow diagram of an embodiment of a method 230 of performing an embodiment of an indirect control flow transfer instruction. In various embodiments, the method may be performed by a processor, instruction processing apparatus, digital logic device, or integrated circuit. In some embodiments, the method 230 may be performed by and/or with the processor 100 of **FIG. 1** and/or using the instruction 106 of **FIG. 1****.** The components, features, and specific optional details described herein for the processor 100 and/or the instruction 106 of **FIG. 1****,** also optionally apply to the method 230. Alternatively, the method 230 may be performed by and/or within a similar or different processor or apparatus and/or using a similar or different instruction. Moreover, the processor of **FIG. 1** may perform methods the same as, similar to, or different than the method 230 of **FIG. 2****.**

The method includes decoding the indirect control flow transfer instruction, at block 231. The indirect control flow transfer instruction may explicitly specify (e.g., have a field to specify) or otherwise indicate (e.g., implicitly indicate) a register storing information indicating an instruction pointer of a target instruction of the indirect control flow transfer instruction.

The method also includes performing operations corresponding to the indirect control flow transfer instruction, at block 232. The operations may include determining whether at least a first set of bits (e.g., a subset of all bits) of an instruction pointer of the indirect control flow transfer instruction are compatible with at least a second set of bits (e.g., a subset of all bits) of the instruction pointer of the target instruction, at block 233. In some embodiments, the compatibility of the first and second sets of bits may encode, define, or designate the intended and/or valid target locations in the program where the control flow transfer instruction is allowed to transfer control flow to. Correspondingly, the lack of compatibility of the first and second sets of bits may represent unintended and/or invalid target locations in the program where the control flow transfer instruction is not allowed to transfer control flow to.

In some embodiments, the first and second sets of bits may be selected by, indicated by, or otherwise based on a mask. For example, the mask may have bits of a first value (e.g., binary one) to select or indicate bits of the instruction pointers as the first and second sets of bits and bits of a second value (e.g., binary zero) to exclude bits of the instruction pointers from the first and second sets of bits. In some embodiments, the indirect control flow transfer instruction may specify the mask (e.g., have an immediate to specify the mask). In other embodiments, the mask may be provided via a register of the processor (e.g., an MSR, a user-accessible register, a special-purpose register, a control and/or configuration register, a general-purpose register, or the like).

The first and second sets of bits may be compatible in different ways, as previously described. In some embodiments, the first and second sets of bits may occupy same bit positions in the instruction pointers and determining whether the first and second sets of bits are compatible may include determining whether the first and second sets of bits are equal. In some embodiments, determining whether the first and second sets of bits are compatible may include determining whether a first result equal to a mask applied to the instruction pointer of the indirect control flow transfer instruction is compatible with a second result equal to a mask applied to the instruction pointer of the target instruction. In some such embodiments, the first result may be equal to a logical AND of the mask and the instruction pointer of the indirect control flow transfer instruction, the second result may be equal to a logical AND of the mask and the instruction pointer of the target instruction, and the first and second results may be compatible when they are equal. In other embodiments, the first and second sets of bits may be compatible if they are compatible through one or more functions or operations applied to the first and second sets of bits and/or a function applied to the instruction pointers of the indirect control flow transfer instruction and the target instruction (e.g., a function including one or more logical operations, cryptographic functions, mathematical functions, transformations, or the like.

Referring again to **FIG. 2****,** if the first and second sets of bits are determined to be compatible (i.e., "yes" is the determination at block 233), then the method may include storing the instruction pointer of the target instruction in an instruction pointer storage, at block 234. This may cause the control flow transfer to the target instruction to take place.

Alternatively, if the first and second sets of bits are determined to not be compatible (i.e., "no" is the determination at block 233), then the method may include raising or otherwise causing an exceptional condition, at block 235. In such a case, the instruction pointer of the target instruction may not be stored in the instruction pointer storage. This may represent not allowing and/or preventing and/or restricting the control flow transfer to the target instruction from taking place. This may help to enhance control flow integrity, as previously described.

**FIG. 3** is a block diagram of one example embodiment of logic 316 to determine whether a first set of bits of an instruction pointer 340 of an indirect control transfer instruction are compatible with a second set of bits of an instruction pointer 314 of a target instruction of the indirect control flow transfer instruction. In some embodiments, the logic 316 may optionally be used as the logic 116 in the execution unit 110 of **FIG. 1****.**

The logic of this example includes a first logical AND circuitry 343. The first logical AND circuitry may be coupled to receive both the instruction pointer 340 of the indirect control transfer instruction and a mask 342. The first logical AND circuitry may be operative to perform a bitwise logical AND operation on the instruction pointer 340 and the mask 342 to generate a first result 345. For each bit of the instruction pointer 340, and each bit of the mask 342 in a corresponding position, the logical AND operation may generate a corresponding bit of the result that is true (e.g., set to binary one) if both corresponding bits of the instruction pointer and the mask are true (e.g., set to binary one) and that is false (e.g., cleared to binary zero) if either one or both corresponding bits of the instruction pointer and the mask are false (e.g., cleared to binary zero). The mask is used to select, indicate, or isolate a first set of bits in the instruction pointer 340 that need to be compared for compatibility (e.g., equality). More specifically, bits set to binary one in the mask will select or keep the values of the corresponding bits of the instruction pointer 340 whereas the bits cleared to binary zero in the mask will zero out or not select the values of the corresponding bits of the instruction pointer 340. As one illustrative simplified example, the instruction pointer 340 may have a hexadecimal value of 0x12341000, the mask 342 may have a hexadecimal value of 0xFFFFF00F, and the first result 345may have a hexadecimal value of 0x12341000, using 32-bit addresses instead of 64-bit addresses for simplicity of illustration. These values are shown below in binary:

| | |
|---|---|
| instruction pointer 340: | 00010010001101000001000000000000 |
| mask 342: | 11111111111111111111000000001111 |
| first result 345: | 00010010001101000001000000000000 |

The logic of this example includes a second logical AND circuitry 344. The second logical AND circuitry may be coupled to receive both the instruction pointer 314 of the target instruction and the mask 342. The second logical AND circuitry may be operative to perform a bitwise logical AND operation on the instruction pointer 314 and the mask 342 to generate a second result 346. The mask is used to select, indicate, or isolate a second set of bits in the instruction pointer 314 that need to be compared for compatibility (e.g., equality) with the first set of bits in corresponding bit positions selected from the instruction pointer 340. More specifically, bits set to binary one in the mask will select or keep the values of the corresponding bits of the instruction pointer 314 whereas the bits cleared to binary zero in the mask will zero out or not select the values of the corresponding bits of the instruction pointer 314.

As one illustrative simplified example, the instruction pointer 314 may have a hexadecimal value of 0x12341480, the mask 342 may have a hexadecimal value of 0xFFFFF00F, and the second result 346 may have a hexadecimal value of 0x12341000, again using 32-bit addresses instead of 64-bit addresses for simplicity of illustration. These values are shown below in binary:

| | |
|---|---|
| instruction pointer 314: | 00010010001101000001010010000000 |
| mask 342: | 11111111111111111111000000001111 |
| second result 346: | 00010010001101000001000000000000 |

The logic of this example also includes comparison circuitry 347. The comparison circuitry may determine whether the first result 345 that is equal to the mask 342 applied to (e.g., in this case logically AND'd with) the instruction pointer 340 of the indirect control flow transfer instruction is compatible with, in this case is equal to or matches, the second result 346 that is equal to the mask 342 applied to (e.g., in this case logically AND'd with) the instruction pointer 314 of the target instruction.

The comparison circuitry may output or provide an equal or not equal indication 348 to indicate whether the first and second results are equal or not. If they are equal and the equal indication is output, then the control flow transfer may be allowed (e.g., the instruction pointer of the target instruction may be stored in the instruction pointer storage). Otherwise, if they are not equal and the not equal indication is output, then the control flow transfer may not be allowed or may be prevented (e.g., the not equal indication may cause an exceptional condition). Accordingly, control flow transfers may only be allowed to occur to instruction pointers whose second set of bits selected by the mask are compatible with (e.g., in this case equal) a first set of bits selected by the mask from the instruction pointer of the indirect control flow transfer instruction. In the illustrative simplified example, the comparison circuitry would indicate that the first and second results are equal so the control flow transfer may be allowed.

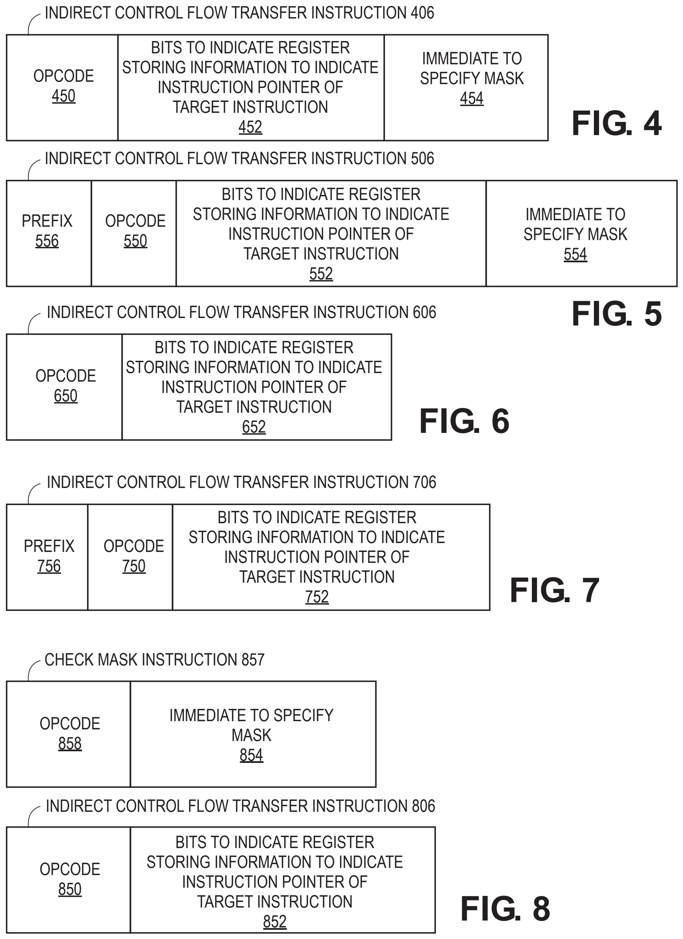

**FIG. 4** is a block diagram of a first example embodiment of an indirect control flow transfer instruction 406. The instruction includes an operation code or opcode 450. The opcode may represent a plurality of bits, or one or more fields, which are operative to identify the instruction and/or the operation to be performed (e.g., an indirect control flow transfer operation restricted based on instruction pointer compatibility). The instruction also includes bits 452 (e.g., a field) to specify or otherwise indicate a register (e.g., a general-purpose register) storing information to indicate an instruction pointer of a target instruction of the indirect control flow transfer instruction or information to indicate a location in system memory storing information to indicate the instruction pointer of the target instruction. The information in the register may either be the instruction pointer of the target instruction or may be used to generate the instruction pointer of the target instruction. Alternatively, it is possible that the register (e.g., a fixed register) may be implicit to the instruction (e.g., the opcode) such that there may be no need to include the bits to specify the register. The instruction also includes an immediate 454 to specify a mask. The immediate may specify the mask in different ways in different embodiments. In some embodiments, the immediate may be the mask. In other embodiments, the immediate may not be the mask but may specify or encode the mask. For example, to reduce the number of bits of the immediate to help reduce the instruction length the immediate may include fewer bits than the mask. As one example, each single bit in the mask may be duplicated or replicated to generate two, three, or more bits of the mask. For example, each bit in a 32-bit value (e.g., as one example the hexadecimal value 0xFF0FFFF3 or corresponding binary value 11111111000011111111111111110011) may be expanded into two identical bits to form a 64-bit mask (e.g., as one example the hexadecimal value 0xFFFF00FFFFFFFF0F or corresponding binary value 1111111111111111000000001111111111111111111111111111111100001111). Possible advantages of using the immediate to specify the mask as opposed to a MSR or control and/or configuration register to store the mask include that the mask could be varied for each indirect control flow transfer instruction (e.g., which could allow jump tables to be sized differently for different groups of target instructions), the operating system or a virtual machine monitor (VMM) would not be required to save and restore the contents of the register on context switches, and user-mode applications would not have to make a system call to enable use of the mask but could just use the indirect control flow transfer instruction having the immediate to specify the mask whenever needed.

**FIG.** 5 is a block diagram of a second example embodiment of an indirect control flow transfer instruction 506. In this embodiment, the instruction includes a prefix 556. The instruction includes an operation code or opcode 550. The prefix may augment or modify the opcode (e.g., an existing opcode for an unrestricted control flow transfer instruction) to be restrictive based on compatibility as described elsewhere herein and to have the immediate. The instruction also includes bits 552 (e.g., a field) to specify or otherwise indicate a register (e.g., a general-purpose register) storing information to indicate an instruction pointer of a target instruction of the indirect control flow transfer instruction or information to indicate a location in system memory storing information to indicate the instruction pointer of the target instruction. The information in the register may either be the instruction pointer of the target instruction or may be used to generate the instruction pointer of the target instruction. Alternatively, it is possible that the register (e.g., a fixed register) may be implicit to the instruction (e.g., the opcode) such that there may be no need to include the bits to specify the register. The instruction also includes an immediate 554 to specify a mask. The immediate may specify the mask in the various different ways described above.

**FIG. 6** is a block diagram of a third example embodiment of an indirect control flow transfer instruction 606. The instruction includes an operation code or opcode 650. The instruction also includes bits 652 (e.g., a field) to specify or otherwise indicate a register (e.g., a general-purpose register) storing information to indicate an instruction pointer of a target instruction of the indirect control flow transfer instruction or information to indicate a location in system memory storing information to indicate the instruction pointer of the target instruction. The information in the register may either be the instruction pointer of the target instruction or may be used to generate the instruction pointer of the target instruction. Alternatively, it is possible that the register (e.g., a fixed register) may be implicit to the instruction (e.g., the opcode) such that there may be no need to include the bits to specify the register. In this embodiment, the instruction does not include the immediate used in the embodiments of FIGS. 4-5. Rather, in this embodiment, it may be implicit to the indirect control flow transfer instruction (e.g., the opcode) that the mask is stored in a register, such as, for example, a MSR, a user-accessible register, a special-purpose register, a control and/or configuration register, a general-purpose register, or the like. Alternatively, it is possible that the indirect control flow transfer instruction may have bits (e.g., a field) to specify an architectural register (e.g., a general-purpose register) that is to store the mask.

**FIG. 7** is a block diagram of a fourth example embodiment of an indirect control flow transfer instruction 706. In this embodiment, the instruction includes a prefix 756. The instruction includes an operation code or opcode 750. The prefix may augment or modify the opcode (e.g., an existing opcode for an unrestricted control flow transfer instruction) to be restrictive based on compatibility as described elsewhere herein and to understand to use a mask from a register. The instruction also includes bits 752 (e.g., a field) to specify or otherwise indicate a register (e.g., a general-purpose register) storing information to indicate an instruction pointer of a target instruction of the indirect control flow transfer instruction or information to indicate a location in system memory storing information to indicate the instruction pointer of the target instruction. The information in the register may either be the instruction pointer of the target instruction or may be used to generate the instruction pointer of the target instruction. Alternatively, it is possible that the register (e.g., a fixed register) may be implicit to the instruction (e.g., the opcode) such that there may be no need to include the bits to specify the register. As in the embodiment of **FIG. 6****,** the instruction does not include the immediate used in the embodiments of **FIGS. 4-5****.** Rather, in this embodiment, it may be implicit to the indirect control flow transfer instruction (e.g., the prefix combined with the opcode) that the mask is stored in a register, such as, for example, a MSR, a user-accessible register, a special-purpose register, a control and/or configuration register, a general-purpose register, or the like. Alternatively, it is possible that the indirect control flow transfer instruction may have bits (e.g., a field) to specify an architectural register (e.g., a general-purpose register) that is to store the mask.

**FIG. 8** is a block diagram of an example embodiment of a check tag instruction 857 and a fifth example embodiment of an indirect control flow transfer instruction 806. The check tag instruction and the indirect control flow transfer instruction are designed or intended to be used together. The check tag instruction includes an operation code or opcode 858 and an immediate 854 to specify a mask. The immediate may specify the mask in the different ways already described. The opcode may specify that the processor is to store the mask specified by the immediate in a register, such as, for example, a MSR, a user-accessible register, a special-purpose register, a control and/or configuration register, or the like, and activate a state machine or circuitry (e.g., cause it to enter a wait for indirect control flow transfer instruction state) to use the mask on the subsequent indirect control flow transfer instruction. The indirect control flow transfer instruction includes an operation code or opcode 850. The opcode may optionally be a legacy or conventional opcode that is not restrictive based on compatibility as described herein and the state machine or circuitry may augment or modify the indirect control flow transfer instruction to have such restriction based on compatibility as described herein. The state machine or circuitry may be deactivated (e.g., caused to enter an idle state) by the indirect control flow transfer instruction. This approach establishes a dependency between the register written by the check mask instruction and the indirect control flow transfer instruction such that the register and/or its mask become a input to the indirect control flow transfer instruction. The contents of this register may optionally be saved and restored during asynchronous events such as interrupts and exceptions. The indirect control flow transfer instruction also includes bits 852 (e.g., a field) to specify or otherwise indicate a register (e.g., a general-purpose register) storing information to indicate an instruction pointer of a target instruction of the indirect control flow transfer instruction or information to indicate a location in system memory storing information to indicate the instruction pointer of the target instruction. The information in the register may either be the instruction pointer of the target instruction or may be used to generate the instruction pointer of the target instruction. Alternatively, it is possible that the register (e.g., a fixed register) may be implicit to the instruction (e.g., the opcode) such that there may be no need to include the bits to specify the register.

FIGS. 4-8 show examples of the types of fields that may be included in the instructions. Alternate embodiments may include a subset of the illustrated fields and/or may add additional fields. The illustrated arrangement of the fields is not required, rather the fields may be rearranged variously. Moreover, each of the fields may either consist of a contiguous set of bits or may include non-contiguous or separated bits that logically represent the field.

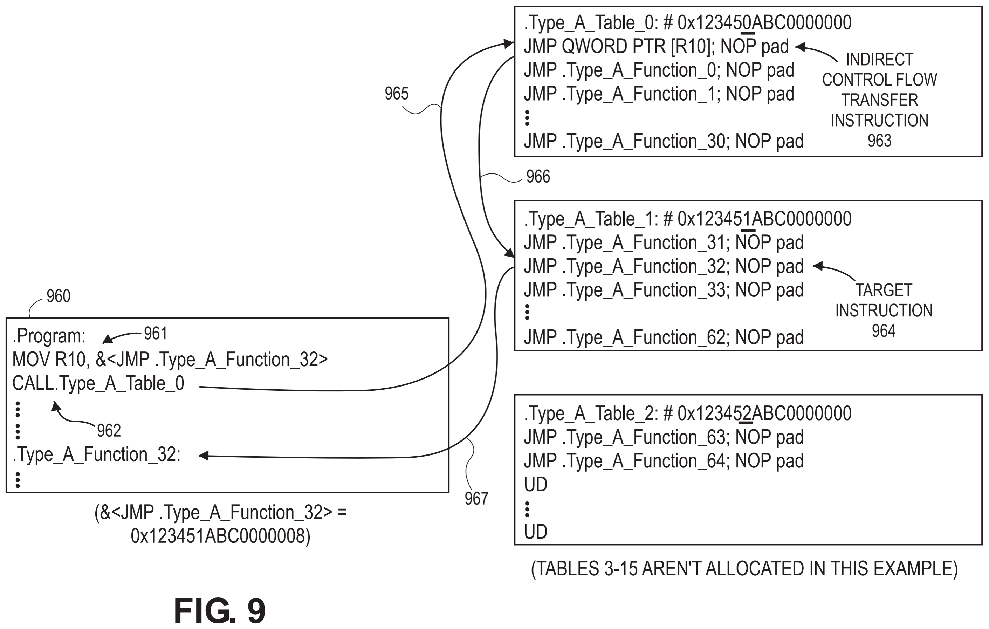

**FIG. 9** illustrates a detailed example embodiment of one possible software use case that may utilize one or more embodiments of restricting indirect control flow transfers based on compatibility of instruction pointers as disclosed herein (e.g., to facilitate fine-grained forward-edge CFI).

Certain programming languages (e.g., the C programming language) use a convention that when calling through a function pointer the type of the target function must match the type of the function pointer. For example, when calling through an integer function pointer the target function must also be integer type, when calling through a floating-point function pointer the target function must also be floating-point type, when calling through a function pointer based on a given number of arguments the target function must also be based on the given number of arguments, and so on.

As shown in the illustration, software may enforce that each indirect function call (e.g., a type of indirect control flow transfer instruction) must resolve to a call target of the same type. This approach involves establishing a set of tables that group indirect call targets (e.g., functions) together according to their type. Such grouping of functions of a common type together into tables is used by certain existing software-based control flow integrity solutions, such as, for example Clang-CFI. In this specific example, there are sixty-five functions (e.g., "Function_0" through "Function_64" of some "type_A" (e.g., either integer or floating point or having a same number of arguments) distributed among three of sixteen (e.g., in this example) possible tables (e.g., Table_0, Table_1, Table_2). In this example, Table_0 includes Function_0 through Function_30, Table_1 includes Function_31 through Function_62, and Table_2 includes function_63 and Function_64. Optionally, attempted access to unused entries in allocated tables may cause an exceptional condition (e.g., as shown by placing undefined "UD" instructions in certain entries in Table_2). The underlined eleventh least significant digit in the addresses of the tables represents a table index, where a value of 0 selects the first table, a value of 1 selects the second table, and a value of 2 selects the third table. In this example, Tables_3 through Table_15 are not used and so have not been allocated. In some cases, the pages where tables 3-15 would reside may not have been mapped yet. In such cases, if the instruction 963 attempts to jump to an address that satisfies compatibility but is not mapped, then a page fault may occur. In other cases, the pages where tables 3-15 would reside may have been mapped but the tables 3-15 may not have been allocated by software. In such cases, if the instruction 963 attempts to jump to an address that satisfies compatibility but is not in an allocated jump table, then the software may deploy some other approach to prevent the control-flow transfer, such as, for example, by filling the compatible region with undefined "UD" instructions.

Refer now to a portion of a software program 960 on the left-hand side of the illustration. The software program includes a MOV instruction 961 that is used to load the address of the intended function's table entry (e.g., the address of the table entry for .Type_A_Function_32) into a register (e.g., in this example general-purpose register R10) which may optionally be designated by the application binary interface (ABI) for determining indirect call targets. A subsequent direct CALL instruction 962 may be used to perform a direct call 965 to an indirect control flow transfer instruction 963 (e.g., in this case a JMP instruction) in a first entry of Table_0 corresponding to the intended function's type. Since the control transfer is direct it may not need to be restricted based on compatibility as described elsewhere herein.

In this example, the first entry of Table_0 contains the single indirect control flow transfer instruction among all the illustrated tables (e.g., all the other JMPs are direct and may not need to be restricted based on compatibility as described elsewhere herein). The indirect control flow transfer instruction 963 (e.g., in this case a JMP instruction) attempts an indirect control flow transfer 966 to a target instruction 964 whose instruction pointer is specified in the register indicated by the indirect control flow transfer instruction (e.g., in this example general-purpose register R10). Beneath the program 960 there is an expression where the symbol "&" is shorthand for "address of" to designate that the address of the target instruction 964 (e.g., JMP .Type_A_Function_32) is 0x123451ABC0000008.

Since this is an indirect control flow transfer 966 it may be checked and/or restricted based on compatibility of the instruction pointer of the indirect control flow transfer instruction 963 and the target instruction 964 as described elsewhere herein. The intention, according to this possible software use case, is that this indirect control flow transfer instruction will perform a control flow transfer to a location or instruction pointer in either the same Table_0 or into another one of the allocated tables Table_1 or Table_2 (e.g., as chosen by a table selector field of the indirect control flow transfer instruction as will be described further below). The instruction pointer of the indirect control transfer instruction 963 and the instruction pointer of the target instruction 964 may be checked for compatibility according to such an intention. As will be discussed further below, in some embodiments, a mask may be used to mask-out bits of the instruction pointers used to select entries in the allocated tables so that only the bits of the instruction pointers that would lead to other locations besides the allocated tables need to be checked for compatibility (e.g., to determine whether the target instruction pointer is in the allocated tables or outside of the allocated tables).

If the attempted indirect control flow transfer 966 is within the allocated tables then the indirect control flow transfer may be allowed but if the attempted indirect control flow 966 transfer is to a different instruction pointer outside of the allocated tables (e.g., attempting to jump or branch to some unknown or unintended location outside of these allocated tables) then the control flow transfer may not be permitted and/or an exceptional condition may be caused. In some embodiments, an exceptional condition may be caused if the target is not an 8-byte aligned entry in one of the tables allocated for functions of type A. The compiler/linker/runtime may optionally prevent invalid 8-byte aligned entries within the allocated tables from being executed by placing trapping instructions, such as undefined (UD) instructions, at those locations, as shown in .Type_A_Table_2.

The target instruction 964 (e.g., in this case a direct JMP instruction) attempts another direct control flow transfer 967 to Type_A_Function_32 which will perform the intended function. Since it is direct in one aspect does not need to be restricted based on compatibility as described elsewhere herein.

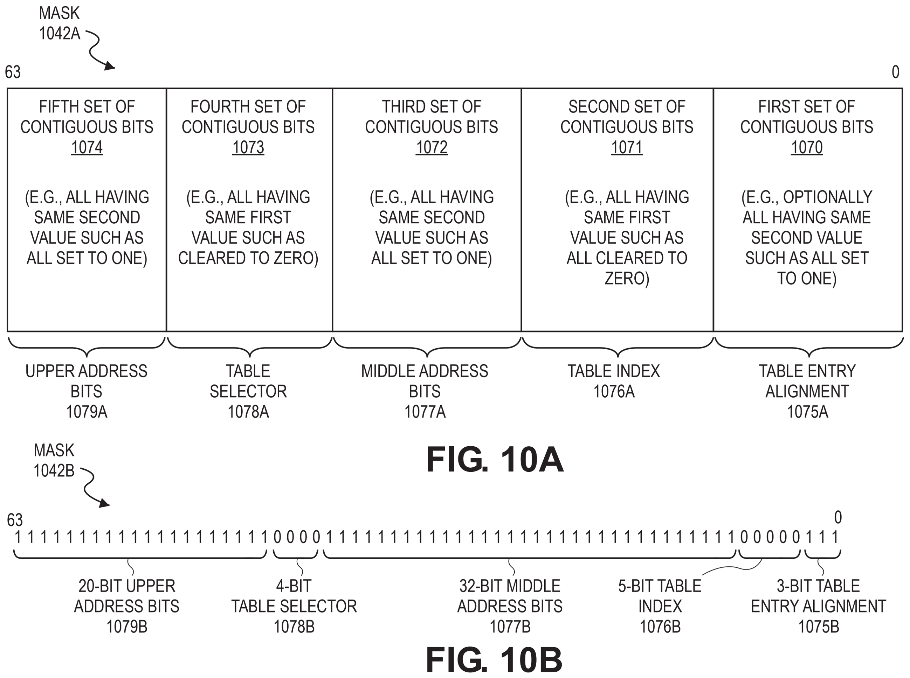

**FIG. 10A** is a block diagram of a detailed example embodiment of a mask 1042A that may be used for the possible software use case of **FIG. 9****.** The mask is a 64-bit mask having a least significant bit-0 and a most significant bit-63.

The mask includes a first set of contiguous least significant bits 1070. In some embodiments, the first set of contiguous least significant bits may optionally all have a same second value (e.g., all be set to binary one if a logical AND operation is to be used). The first set of contiguous least significant bits may be used as a table entry alignment field 1075A to enforce that an indirect control flow transfer is made to a target instruction at this alignment (e.g., to the start of a target instruction rather than to an intermediate point within the target instruction). For example, if each table entry is eight bytes, then the table entry alignment field may be three bits wide. Alternatively, the table entry alignment field may optionally be omitted (e.g., all bits may have the same first value instead of the second value if the underlying architecture already has capabilities of ensuring such alignment (e.g., that will catch or prevent jumping to an intermediate point within an instruction)

The mask also includes a second set of contiguous bits 1071 immediately more significant than the first set of contiguous least significant bits. The second set of contiguous bits may all have the same first value (e.g., all be cleared to binary zero if a logical AND operation is to be used). The second set of contiguous bits may be used as a table index field 1076A to index or select an entry within a table of functions. The width in bits of the table index field may determine the maximum number of entries per table, minus one. For example, a 4-bit table index field may be used to select any one of sixteen entries in a table.

The mask also includes a third set of contiguous bits 1072 immediately more significant than the second set contiguous bits. The third set of contiguous bits may all have the same second value (e.g., all be set to binary one if a logical AND operation is to be used). The third set of contiguous bits may represent middle address bits 1077A.

The mask also includes a fourth set of contiguous bits 1073 immediately more significant than the third set contiguous bits. The fourth set of contiguous bits may all have the same first value (e.g., all be cleared to binary zero if a logical AND operation is to be used). The fourth set of contiguous bits may be used as a table selector field 1078A to select one of multiple allocated tables. The table selector field may allow additional tables to be allocated either at compile/link time or at runtime. The width of the table selector field determines the maximum number of tables that can be allocated for a given function type. In some embodiments, the table selector field may optionally be placed in high order bits of the mask more significant than the bits used for addressing memory by most programs (e.g., so that they do not tie up bits that can be used for addressing memory). Alternatively, it is also possible for the table selector field to be merged with the table index field without the intervening third set of contiguous bits.

The mask also includes a fifth set of contiguous bits 1074 immediately more significant than the fourth set contiguous bits. The fifth set of contiguous bits may all have the same second value (e.g., all be set to binary one if a logical AND operation is to be used). The fifth set of contiguous bits may represent upper address bits 1079A. In other embodiments, some of the upper address bits may be used to hold metadata such that additional structured complexity of the mask may optionally be used for the upper address bits to mask out some metadata fields.

If the mask 1042A is applied to an instruction pointer through a logical AND operation, then the mask bits set to binary one will select bit values in corresponding bit positions of the instruction pointer as a set of bit values to be used to determine compatibility. By way of example, bits of the instruction pointer corresponding to the third 1072 and fifth 1074 sets of bits and optionally the first set of bits 1070 of the mask may be selected. Conversely, the mask bits cleared to binary zero will mask off or exclude bit values in corresponding bit positions of the instruction pointer from the set of bit values to be used to determine compatibility. By way of example, bits of the instruction pointer corresponding to the second 1071 and fourth 1073 sets of bits of the mask may not be selected and may be excluded from the determination of compatibility.

**FIG. 10B** is a block diagram of a specific illustrative detailed example embodiment of a mask 1042B that may be used for the possible software use case of **FIG. 9****.** The mask is a 64-bit mask having a least significant bit-0 and a most significant bit-63. In this embodiment, the mask includes a 3-bit table entry alignment field 1075B, a 5-bit table index field 1076B, a 32-bit middle address bits field 1077B, a 4-bit table selector field 1078B, and a 20-bit upper address bits field 1079B. For this example, the program may be able to enforce forward-edge CFI if every function type has fewer than 2^5*2^4=512 instances. If a function type exceeds this number of instances during runtime (for example, due to dynamic loading) then the dynamic linker can expand the table selector to allow more tables to be allocated. This is just one illustrative example. Other masks may have other sized fields, may optionally omit the table entry alignment field, may group the table index field and the table selector field, and so on.

In the embodiments of FIGS. 10A-B, contiguous bits have been used for the table index and the table selector, although the scope of the invention is not so limited. It is also possible to use non-contiguous or scattered locations and corresponding non-contiguous bits for the table index and/or the table selector.

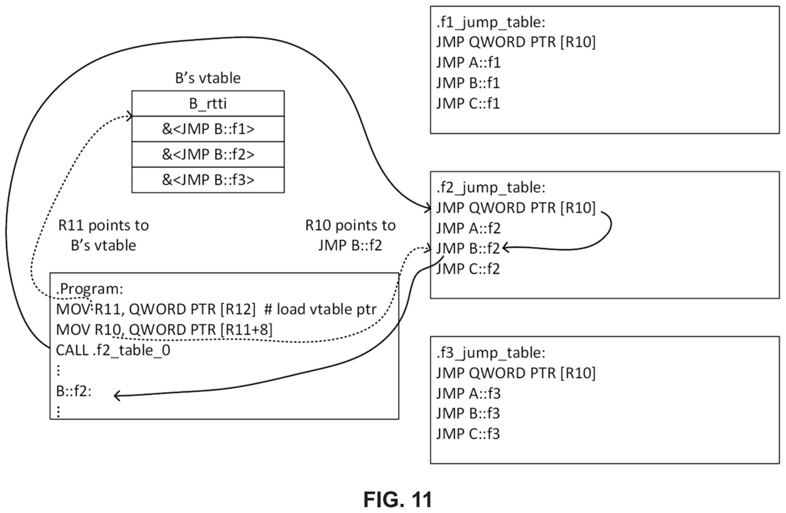

FIG. 11 illustrates an example embodiment of another possible software use case that may utilize one or more embodiments of restricting indirect control flow transfers based on compatibility of instruction pointers as disclosed herein to enforce forward-edge control flow integrity for virtual function calls. Popular programming languages such as C++ may implement a virtual function hierarchy and commonly group virtual functions together into tables, with one "vtable" for each polymorphic type.

By way of example, a virtual call such as ((A*)ptr)->f2() may be compiled into x86-64 assembly such as:

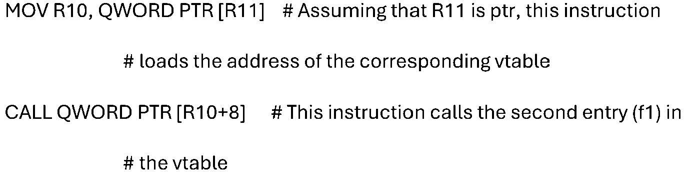

By way of example, this may help to protect against virtual calls being hijacked by a malicious adversary, for example, by corrupting an object's vtable pointer and redirecting it to an attacker-controlled buffer. One or more embodiments may defend against such an attack by using an algorithm to coalesce related virtual functions into lists. This algorithm may be used by a compiler or linker to create tables of virtual functions such that each function in a table overrides (or is overridden by) at least one other function in the table. A vtable layout may be created with additional jump tables that group virtual functions such that each function in a table overrides (or is overridden by) at least one other function in the table. In the illustrated example, three tables of virtual functions are shown on the right hand side. In this example, A::f1(), B::f1(), and C::f1() are grouped into a first table labeled ".f1_jump_table", A::f2(), B::f2(), C::f2() are grouped into a second table labeled ".f2_jump_table", A::f3(), B::f3(), C::f3() are grouped into a third table labeled ".f3_jump_table". Based on this, secure control-flow may be achieved using jump tables and the masks or other compatibility approaches disclosed herein. For example, if the largest jump table contains 4 entries (1 indirect jump and 3 direct jumps), the mask register may be based on a table index at least 2 bits wide.

Like the C++ assembly example above, to make a virtual call the first instruction (e.g., the first MOV instruction) in a program labeled ".Program:" may first load the vtable pointer into R11. Then, the next instruction (e.g., the second MOV instruction) in the program may load into R10 the table entry that corresponds to the virtual function invoked at the subsequent call site, such as f2(). Unlike the C++ assembly example above, this vtable entry is the address of the instruction in the second table labeled ".f2_jump_table" that jumps to the implementation of f2() that corresponds to the invoked object's type (e.g., B::f2() in this example). The third instruction (e.g., the CALL instruction) in the program calls the first entry in the second table labeled ".f2_jump_table" which contains a fourth instruction (e.g., in this example "JMP QWORD PTR [R10]" which is an indirect jump to R10. Since R10 was loaded with the address of JMP B::f2 by the second instruction, JMP B::f2 is the fifth instruction, which reaches the intended target of the virtual call (e.g., in this example B::f2:. If the mask register is configured with a 2-bit table index then the indirect jump in the second table labeled ".f2_jump_table" can only reach the four instructions in that table. In such a case, a vtable hijacking attack can, at worst, redirect control flow to a different implementation of f2().

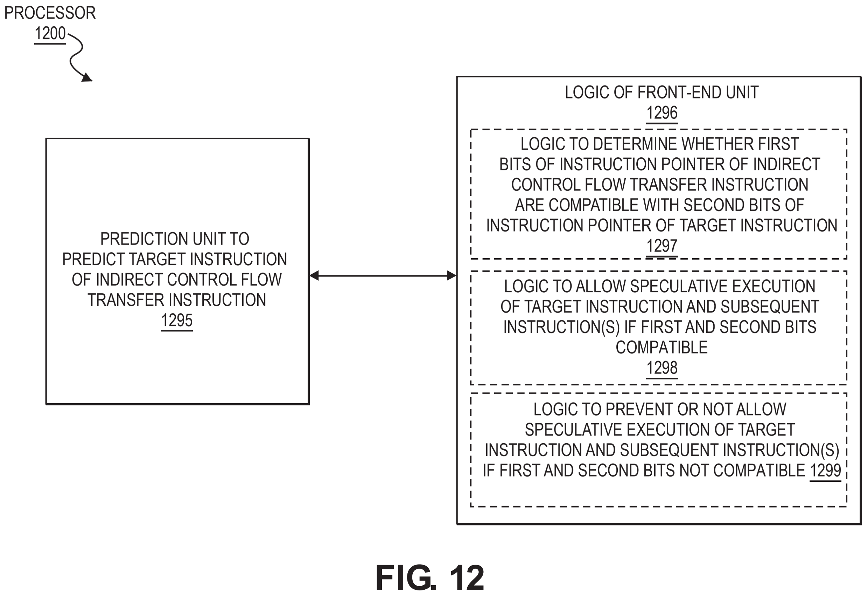

**FIG. 12** **is** a block diagram of an embodiment of a processor 1200 that is operative to allow or restrict speculative execution at a predicted target instruction based on compatibility of instruction pointers of the target instruction and its indirect control flow transfer instruction. The processor may be similar to or the same as the processor already described for **FIG. +1** (e.g., be a general-purpose processor or a special-purpose processor, have a CISC, RISC, or VLIW architecture, include at least some hardware, may optionally include other components shown in other processors herein, and so on).

The processor includes a prediction unit 1295, for example an indirect branch predictor, to predict a target instruction of the indirect control flow transfer instruction. The indirect control flow transfer instruction may be similar to or the same as those already described.

The processor also includes circuitry or other logic 1296, of a front-end unit of the processor, which is coupled with the prediction unit 1295. In some embodiments, the logic 1296 and/or the processor may be operative to determine whether at least a first set of bits (e.g., a subset of all bits) of an instruction pointer of the indirect control flow transfer instruction are compatible with at least a second set of bits (e.g., a subset of all bits) of the instruction pointer of the target instruction. As shown, in some embodiments, the circuitry 1296 may optionally include circuitry or other logic 1297 to make this determination. This may represent a check of whether the control flow transfer is being made to a valid target instruction. This determination be made in ways similar to or the same as those already described above (e.g., the first and second sets of bits may be compatible in the different ways already described (e.g., when they are equal, through a function, and so on), in some embodiments the first and second sets of bits may be selected by or otherwise based on a mask, in some embodiments the mask may be obtained from an immediate of the indirect control flow transfer instruction or in other embodiments from a register, and so on).

In some embodiments, such a determination may be made quickly in the front end of the processor. For example, in an embodiment where the mask is stored in a register, the determination may optionally be made by the prediction unit or circuitry or logic closely associated with the prediction unit and even prior to decode, since the instruction pointers may be known by the prediction unit and the mask may be retrieved from the register and applied as soon as the prediction unit predicts the target instruction. As another example, in an embodiment where the mask is specified by an immediate of the indirect control flow transfer instruction, the determination may be made by a decode unit or circuitry or logic closely associated with the decode unit, since the immediate may be decoded to determine the mask and may then be applied to the instruction pointers.

In some embodiments, the logic 1296 and/or the processor may be operative to allow speculative execution of the target instruction, and zero, one, or more instructions immediately after the target instruction, if the first and second sets of bits are determined to be compatible (e.g., if the control flow transfer is being made to a valid target instruction). As shown, in some embodiments, the logic 1296 may optionally include circuitry or other logic 1298 to do this. The processor may safely begin issuing and speculatively executing the target instruction and one or more instructions after the target instruction without waiting for the indirect control flow transfer instruction to execute.. Allowing the speculative execution may include continuing to speculatively execute instructions but not committing the instructions so whatever updates they would have made to architectural state can be discarded if the prediction of the target instruction of the indirect control flow transfer instruction turns out to be incorrect. This may help to improve performance by allowing speculative execution to begin sooner thereby avoiding unnecessarily stalling the processor.

The front end does not necessarily need to wait to allow speculative execution at the target instruction until the indirect control flow transfer instruction has been decoded, since if the instruction pointer of the indirect control flow transfer instruction was recorded as an indirect control flow transfer instruction in the branch history and the determination indicates a valid target instruction, then the front end may begin fetching, decoding, and executing at the target instruction and subsequent instructions even if the indirect control flow transfer instruction has not been decoded. This may improve performance, for example, on fixed-instruction-width architectures where instruction decoding may occur out of order.

In some embodiments, the logic 1296 and/or the processor may be operative to not allow speculative execution of the target instruction, or the one or more instructions immediately after the target instruction in program order, if the first and second sets of bits are determined to not be compatible (e.g., if the control flow transfer is not being made to a valid target instruction). As shown, in some embodiments, the logic 1296 may optionally include circuitry or other logic 1299 to do this. This may include stalling the processor (e.g., stalling the decode of further instructions) and waiting for the indirect control flow transfer instruction to execute before starting to issue and execute the target instruction, and the instructions immediately after the target instruction in program order. If desired, the processor may in some cases optionally still fetch and decode the target instruction, and the instructions immediately after the target instruction in program order, since fetching and decoding may not expose the same microarchitectural Spectre style vulnerabilities.

There are also several attacks that exploit a processor's microarchitectural behavior to hijack the victim program's control flow during speculative execution, for example, after a branch misprediction. In some embodiments, this approach may be used to help protect against microarchitectural attacks that abuse branch prediction, such as Branch Target Injection (BTI), Spectre v2, or the like. This approach may help to restrict potentially hazardous microarchitectural behavior.

In some embodiments, the processor of **FIG. 12** may optionally also support the features described for the processor of **FIG. 1****.** In other embodiments, the processor of **FIG. 12** need not also support the features described for the processor of **FIG. 1****.** That is, a processor of embodiments may use either the approach shown in **FIG. 1****,** or the approach shown in **FIG. 12****,** or optionally both the approach shown in **FIG. 1** and the approach shown in **FIG. 12****.**

In some embodiments, a MSR or other control and/or configuration register may optionally have one or more new bits to enable and/or disable the use of the compatibility checking as disclosed herein. As another option, in some embodiments, the use of the compatibility checking as disclosed herein may optionally be disabled in other ways, such as, for example, by causing the mask to have a given value (e.g., all zeroes in the case of a logical AND operation) that would cause all target instructions to be determined to be valid transfer points. In some embodiments, a MSR or other control and/or configuration register may optionally have one or more new bits to control whether a mask in a register is to be saved and restored on context switches.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are suitable.

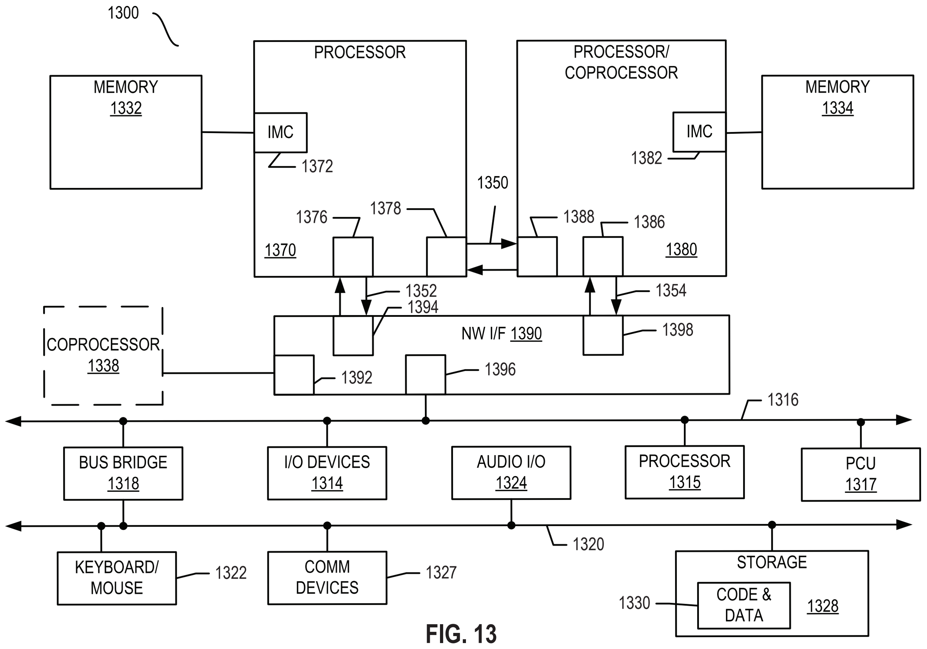

**FIG. 13** illustrates an example computing system. Multiprocessor system 1300 is an interfaced system and includes a plurality of processors or cores including a first processor 1370 and a second processor 1380 coupled via an interface 1350 such as a point-to-point (P-P) interconnect, a fabric, and/or bus. In some examples, the first processor 1370 and the second processor 1380 are homogeneous. In some examples, the first processor 1370 and the second processor 1380 are heterogenous. Though the example system 1300 is shown to have two processors, the system may have three or more processors, or may be a single processor system. In some examples, the computing system is a system on a chip (SoC).

Processors 1370 and 1380 are shown including integrated memory controller (IMC) circuitry 1372 and 1382, respectively. Processor 1370 also includes interface circuits 1376 and 1378; similarly, second processor 1380 includes interface circuits 1386 and 1388. Processors 1370, 1380 may exchange information via the interface 1350 using interface circuits 1378, 1388. IMCs 1372 and 1382 couple the processors 1370, 1380 to respective memories, namely a memory 1332 and a memory 1334, which may be portions of main memory locally attached to the respective processors.

Processors 1370, 1380 may each exchange information with a network interface (NW I/F) 1390 via individual interfaces 1352, 1354 using interface circuits 1376, 1394, 1386, 1398. The network interface 1390 (e.g., one or more of an interconnect, bus, and/or fabric, and in some examples is a chipset) may optionally exchange information with a coprocessor 1338 via an interface circuit 1392. In some examples, the coprocessor 1338 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1370, 1380 or outside of both processors, yet connected with the processors via an interface such as P-P interconnect, such that either or both processors' local cache information may be stored in the shared cache if a processor is placed into a low power mode.

Network interface 1390 may be coupled to a first interface 1316 via interface circuit 1396. In some examples, the first interface 1316 may be an interface such as a Peripheral Component Interconnect (PCI) interconnect, a PCI Express interconnect or another I/O interconnect. In some examples, the first interface 1316 is coupled to a power control unit (PCU) 1317, which may include circuitry, software, and/or firmware to perform power management operations regarding the processors 1370, 1380 and/or co-processor 1338. PCU 1317 provides control information to a voltage regulator (not shown) to cause the voltage regulator to generate the appropriate regulated voltage. PCU 1317 also provides control information to control the operating voltage generated. In various examples, PCU 1317 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1317 is illustrated as being present as logic separate from the processor 1370 and/or processor 1380. In other cases, PCU 1317 may execute on a given one or more of cores (not shown) of processor 1370 or 1380. In some cases, PCU 1317 may be implemented as a microcontroller (dedicated or general-purpose) or other control logic configured to execute its own dedicated power management code, sometimes referred to as P-code. In yet other examples, power management operations to be performed by PCU 1317 may be implemented externally to a processor, such as by way of a separate power management integrated circuit (PMIC) or another component external to the processor. In yet other examples, power management operations to be performed by PCU 1317 may be implemented within BIOS or other system software.

Various I/O devices 1314 may be coupled to first interface 1316, along with a bus bridge 1318 which couples first interface 1316 to a second interface 1320. In some examples, one or more additional processor(s) 1315, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1316. In some examples, the second interface 1320 may be a low pin count (LPC) interface. Various devices may be coupled to second interface 1320 including, for example, a keyboard and/or mouse 1322, communication devices 1327 and storage circuitry 1328. Storage circuitry 1328 may be one or more non-transitory machine-readable storage media as described below, such as a disk drive or other mass storage device which may include instructions/code and data 1330 and may implement the storage 'ISAB03 in some examples. Further, an audio I/O 1324 may be coupled to second interface 1320. Note that other architectures than the point-to-point architecture described above are possible. For example, instead of the point-to-point architecture, a system such as multiprocessor system 1300 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

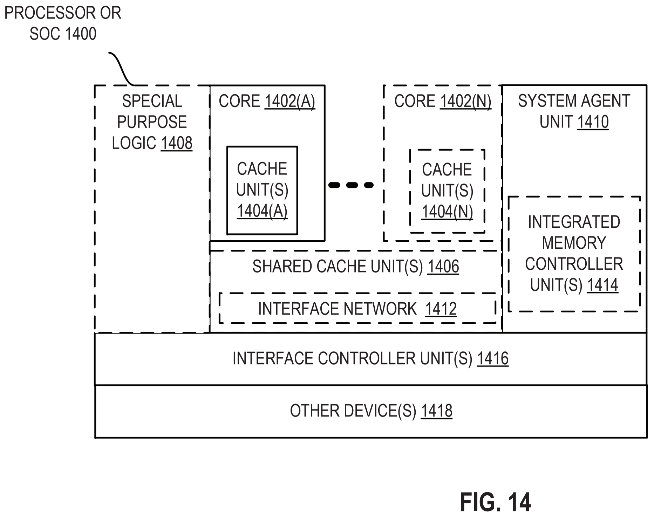

**FIG. 14** illustrates a block diagram of an example processor and/or SoC 1400 that may have one or more cores and an integrated memory controller. The solid lined boxes illustrate a processor 1400 with a single core 1402(A), system agent unit circuitry 1410, and a set of one or more interface controller unit(s) circuitry 1416, while the optional addition of the dashed lined boxes illustrates an alternative processor 1400 with multiple cores 1402(A)-(N), a set of one or more integrated memory controller unit(s) circuitry 1414 in the system agent unit circuitry 1410, and special purpose logic 1408, as well as a set of one or more interface controller units circuitry 1416. Note that the processor 1400 may be one of the processors 1370 or 1380, or co-processor 1338 or 1315 of **FIG. 13****.**

Thus, different implementations of the processor 1400 may include: 1) a CPU with the special purpose logic 1408 being integrated graphics and/or scientific (throughput) logic (which may include one or more cores, not shown), and the cores 1402(A)-(N) being one or more general purpose cores (e.g., general purpose in-order cores, general purpose out-of-order cores, or a combination of the two); 2) a coprocessor with the cores 1402(A)-(N) being a large number of special purpose cores intended primarily for graphics and/or scientific (throughput); and 3) a coprocessor with the cores 1402(A)-(N) being a large number of general purpose in-order cores. Thus, the processor 1400 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1400 may be a part of and/or may be implemented on one or more substrates using any of several process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1404(A)-(N) within the cores 1402(A)-(N), a set of one or more shared cache unit(s) circuitry 1406, and external memory (not shown) coupled to the set of integrated memory controller unit(s) circuitry 1414. The set of one or more shared cache unit(s) circuitry 1406 may include one or more mid-level caches, such as level 2 (L2), level 3 (L3), level 4 (L4), or other levels of cache, such as a last level cache (LLC), and/or combinations thereof. While in some examples interface network circuitry 1412 (e.g., a ring interconnect) interfaces the special purpose logic 1408 (e.g., integrated graphics logic), the set of shared cache unit(s) circuitry 1406, and the system agent unit circuitry 1410, alternative examples use any number of well-known techniques for interfacing such units. In some examples, coherency is maintained between one or more of the shared cache unit(s) circuitry 1406 and cores 1402(A)-(N). In some examples, interface controller units circuitry 1416 couple the cores 1402 to one or more other devices 1418 such as one or more I/O devices, storage, one or more communication devices (e.g., wireless networking, wired networking, etc.), etc.

In some examples, one or more of the cores 1402(A)-(N) are capable of multi-threading. The system agent unit circuitry 1410 includes those components coordinating and operating cores 1402(A)-(N). The system agent unit circuitry 1410 may include, for example, power control unit (PCU) circuitry and/or display unit circuitry (not shown). The PCU may be or may include logic and components needed for regulating the power state of the cores 1402(A)-(N) and/or the special purpose logic 1408 (e.g., integrated graphics logic). The display unit circuitry is for driving one or more externally connected displays.

The cores 1402(A)-(N) may be homogenous in terms of instruction set architecture (ISA). Alternatively, the cores 1402(A)-(N) may be heterogeneous in terms of ISA; that is, a subset of the cores 1402(A)-(N) may be capable of executing an ISA, while other cores may be capable of executing only a subset of that ISA or another ISA.

### Example Core Architectures - In-order and out-of-order core block diagram.

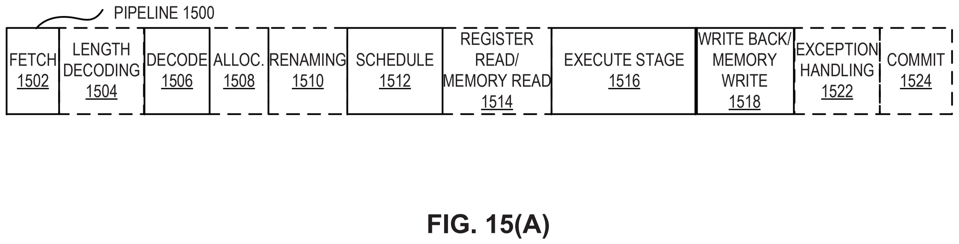

**FIG. 15(A)** is a block diagram illustrating both an example in-order pipeline and an example register renaming, out-of-order issue/execution pipeline according to examples. **FIG. 15(B)** is a block diagram illustrating both an example in-order architecture core and an example register renaming, out-of-order issue/execution architecture core to be included in a processor according to examples. The solid lined boxes in **FIGS. 15(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

**In** **FIG. 15(A)****,** a processor pipeline 1500 includes a fetch stage 1502, an optional length decoding stage 1504, a decode stage 1506, an optional allocation (Alloc) stage 1508, an optional renaming stage 1510, a schedule (also known as a dispatch or issue) stage 1512, an optional register read/memory read stage 1514, an execute stage 1516, a write back/memory write stage 1518, an optional exception handling stage 1522, and an optional commit stage 1524. One or more operations can be performed in each of these processor pipeline stages. For example, during the fetch stage 1502, one or more instructions are fetched from instruction memory, and during the decode stage 1506, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1506 and the register read/memory read stage 1514 may be combined into one pipeline stage. In one example, during the execute stage 1516, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of **FIG. 15(B)** may implement the pipeline 1500 as follows: 1) the instruction fetch circuitry 1538 performs the fetch and length decoding stages 1502 and 1504; 2) the decode circuitry 1540 performs the decode stage 1506; 3) the rename/allocator unit circuitry 1552 performs the allocation stage 1508 and renaming stage 1510; 4) the scheduler(s) circuitry 1556 performs the schedule stage 1512; 5) the physical register file(s) circuitry 1558 and the memory unit circuitry 1570 perform the register read/memory read stage 1514; the execution cluster(s) 1560 perform the execute stage 1516; 6) the memory unit circuitry 1570 and the physical register file(s) circuitry 1558 perform the write back/memory write stage 1518; 7) various circuitry may be involved in the exception handling stage 1522; and 8) the retirement unit circuitry 1554 and the physical register file(s) circuitry 1558 perform the commit stage 1524.

**FIG. 15(B)** shows a processor core 1590 including front-end unit circuitry 1530 coupled to execution engine unit circuitry 1550, and both are coupled to memory unit circuitry 1570. The core 1590 may be a reduced instruction set architecture computing (RISC) core, a complex instruction set architecture computing (CISC) core, a very long instruction word (VLIW) core, or a hybrid or alternative core type. As yet another option, the core 1590 may be a special-purpose core, such as, for example, a network or communication core, compression engine, coprocessor core, general purpose computing graphics processing unit (GPGPU) core, graphics core, or the like.

The front-end unit circuitry 1530 may include branch prediction circuitry 1532 coupled to instruction cache circuitry 1534, which is coupled to an instruction translation lookaside buffer (TLB) 1536, which is coupled to instruction fetch circuitry 1538, which is coupled to decode circuitry 1540. In one example, the instruction cache circuitry 1534 is included in the memory unit circuitry 1570 rather than the front-end circuitry 1530. The decode circuitry 1540 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1540 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1540 may be implemented using various mechanisms. Examples of suitable mechanisms include, but are not limited to, look-up tables, hardware implementations, programmable logic arrays (PLAs), microcode read only memories (ROMs), etc. In one example, the core 1590 includes a microcode ROM (not shown) or other medium that stores microcode for certain macroinstructions (e.g., in decode circuitry 1540 or otherwise within the front-end circuitry 1530). In one example, the decode circuitry 1540 includes a micro-operation (micro-op) or operation cache (not shown) to hold/cache decoded operations, micro-tags, or micro-operations generated during the decode or other stages of the processor pipeline 1500. The decode circuitry 1540 may be coupled to rename/allocator unit circuitry 1552 in the execution engine circuitry 1550.

The execution engine circuitry 1550 includes the rename/allocator unit circuitry 1552 coupled to retirement unit circuitry 1554 and a set of one or more scheduler(s) circuitry 1556. The scheduler(s) circuitry 1556 represents any number of different schedulers, including reservations stations, central instruction window, etc. In some examples, the scheduler(s) circuitry 1556 can include arithmetic logic unit (ALU) scheduler/scheduling circuitry, ALU queues, address generation unit (AGU) scheduler/scheduling circuitry, AGU queues, etc. The scheduler(s) circuitry 1556 is coupled to the physical register file(s) circuitry 1558. Each of the physical register file(s) circuitry 1558 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1558 includes vector registers unit circuitry, writemask registers unit circuitry, and scalar register unit circuitry. These register units may provide architectural vector registers, vector mask registers, general-purpose registers, etc. The physical register file(s) circuitry 1558 is coupled to the retirement unit circuitry 1554 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1554 and the physical register file(s) circuitry 1558 are coupled to the execution cluster(s) 1560. The execution cluster(s) 1560 includes a set of one or more execution unit(s) circuitry 1562 and a set of one or more memory access circuitry 1564. The execution unit(s) circuitry 1562 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include several execution units or execution unit circuitry dedicated to specific functions or sets of functions, other examples may include only one execution unit circuitry or multiple execution units/execution unit circuitry that all perform all functions. The scheduler(s) circuitry 1556, physical register file(s) circuitry 1558, and execution cluster(s) 1560 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1564). It should also be understood that where separate pipelines are used, one or more of these pipelines may be out-of-order issue/execution and the rest in-order.

In some examples, the execution engine unit circuitry 1550 may perform load store unit (LSU) address/data pipelining to an Advanced Microcontroller Bus (AMB) interface (not shown), and address phase and writeback, data phase load, store, and branches.

The set of memory access circuitry 1564 is coupled to the memory unit circuitry 1570, which includes data TLB circuitry 1572 coupled to data cache circuitry 1574 coupled to level 2 (L2) cache circuitry 1576. In one example, the memory access circuitry 1564 may include load unit circuitry, store address unit circuitry, and store data unit circuitry, each of which is coupled to the data TLB circuitry 1572 in the memory unit circuitry 1570. The instruction cache circuitry 1534 is further coupled to the level 2 (L2) cache circuitry 1576 in the memory unit circuitry 1570. In one example, the instruction cache 1534 and the data cache 1574 are combined into a single instruction and data cache (not shown) in L2 cache circuitry 1576, level 3 (L3) cache circuitry (not shown), and/or main memory. The L2 cache circuitry 1576 is coupled to one or more other levels of cache and eventually to a main memory.

The core 1590 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1590 includes logic to support a packed data instruction set architecture extension (e.g., AVX1, AVX2), thereby allowing the operations used by many multimedia applications to be performed using packed data.

### Example Execution Unit(s) Circuitry.

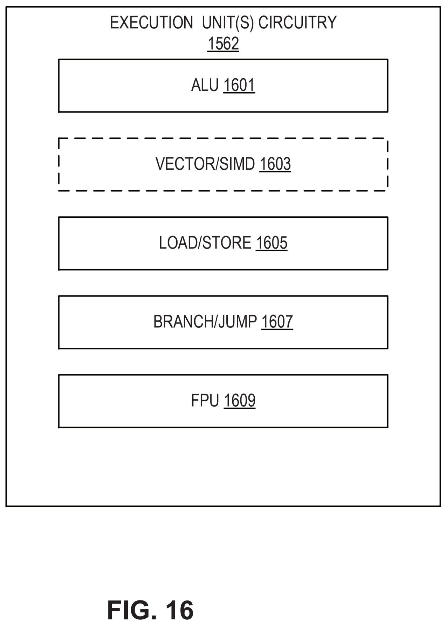

**FIG. 16** illustrates examples of execution unit(s) circuitry, such as execution unit(s) circuitry 1562 of **FIG. 15(B)****.** As illustrated, execution unit(s) circuity 1562 may include one or more ALU circuits 1601, optional vector/single instruction multiple data (SIMD) circuits 1603, load/store circuits 1605, branch/jump circuits 1607, and/or Floating-point unit (FPU) circuits 1609. ALU circuits 1601 perform integer arithmetic and/or Boolean operations. Vector/SIMD circuits 1603 perform vector/SIMD operations on packed data (such as SIMD/vector registers). Load/store circuits 1605 execute load and store instructions to load data from memory into registers or store from registers to memory. Load/store circuits 1605 may also generate addresses. Branch/jump circuits 1607 cause a branch or jump to a memory address depending on the instruction. FPU circuits 1609 perform floating-point arithmetic. The width of the execution unit(s) circuitry 1562 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

**FIG. 17** is a block diagram of a register architecture 1700 according to some examples. As illustrated, the register architecture 1700 includes vector/SIMD registers 1710 that vary from 128-bit to 1,024 bits width. In some examples, the vector/SIMD registers 1710 are physically 512-bits and, depending upon the mapping, only some of the lower bits are used. For example, in some examples, the vector/SIMD registers 1710 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1700 includes writemask/predicate registers 1715. For example, in some examples, there are 8 writemask/predicate registers (sometimes called k0 through k7) that are each 16-bit, 32-bit, 64-bit, or 128-bit in size. Writemask/predicate registers 1715 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1715 corresponds to a data element position of the destination. In other examples, the writemask/predicate registers 1715 are scalable and consists of a set number of enable bits for a given vector element (e.g., 8 enable bits per 64-bit vector element).

The register architecture 1700 includes a plurality of general-purpose registers 1725. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1700 includes scalar floating-point (FP) register file 1745 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1740 (e.g., EFLAGS, RFLAGS, etc.) store status and control information for arithmetic, compare, and system operations. For example, the one or more flag registers 1740 may store condition code information such as carry, parity, auxiliary carry, zero, sign, and overflow. In some examples, the one or more flag registers 1740 are called program status and control registers.

Segment registers 1720 contain segment points for use in accessing memory. In some examples, these registers are referenced by the names CS, DS, SS, ES, FS, and GS.

Machine specific registers (MSRs) 1735 control and report on processor performance. Most MSRs 1735 handle system-related functions and are not accessible to an application program. Machine check registers 1760 consist of control, status, and error reporting MSRs that are used to detect and report on hardware errors.

One or more instruction pointer register(s) 1730 store an instruction pointer value. Control register(s) 1755 (e.g., CR0-CR4) determine the operating mode of a processor (e.g., processor 1370, 1380, 1338, 1315, and/or 1400) and the characteristics of a currently executing task. Debug registers 1750 control and allow for the monitoring of a processor or core's debugging operations.

Memory (mem) management registers 1765 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1700 may, for example, be used in register file / memory 'ISAB08, or physical register file(s) circuitry 15 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

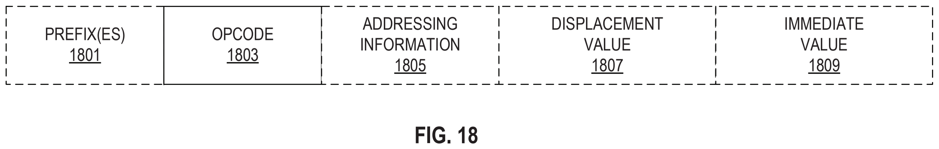

**FIG. 18** illustrates examples of an instruction format. As illustrated, an instruction may include multiple components including, but not limited to, one or more fields for: one or more prefixes 1801, an opcode 1803, addressing information 1805 (e.g., register identifiers, memory addressing information, etc.), a displacement value 1807, and/or an immediate value 1809. Note that some instructions utilize some or all the fields of the format whereas others may only use the field for the opcode 1803. In some examples, the order illustrated is the order in which these fields are to be encoded, however, it should be appreciated that in other examples these fields may be encoded in a different order, combined, etc.

The prefix(es) field(s) 1801, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1803 is used to at least partially define the operation to be performed upon a decoding of the instruction. In some examples, a primary opcode encoded in the opcode field 1803 is one, two, or three bytes in length. In other examples, a primary opcode can be a different length. An additional 3-bit opcode field is sometimes encoded in another field.

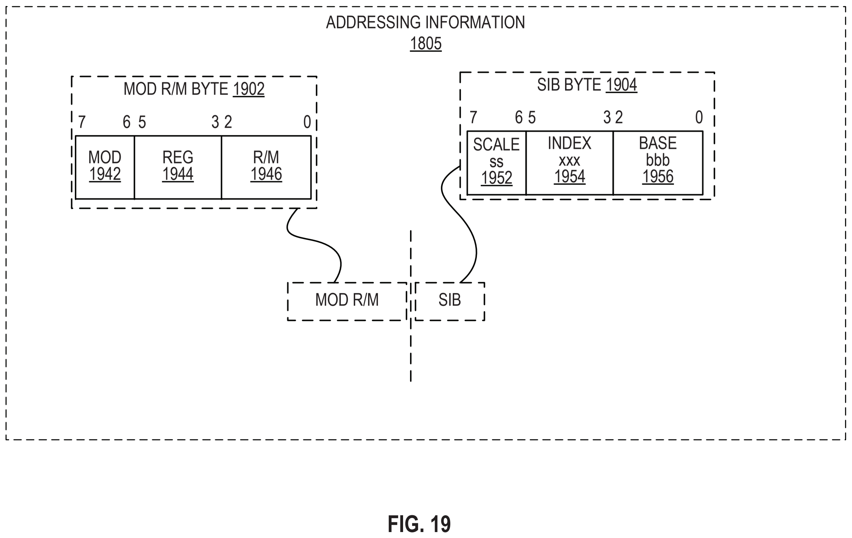

The addressing information field 1805 is used to address one or more operands of the instruction, such as a location in memory or one or more registers. **FIG. 19** illustrates examples of the addressing information field 1805. In this illustration, an optional MOD R/M byte 1902 and an optional Scale, Index, Base (SIB) byte 1904 are shown. The MOD R/M byte 1902 and the SIB byte 1904 are used to encode up to two operands of an instruction, each of which is a direct register or effective memory address. Note that both fields are optional in that not all instructions include one or more of these fields. The MOD R/M byte 1902 includes a MOD field 1942, a register (reg) field 1944, and R/M field 1946.

The content of the MOD field 1942 distinguishes between memory access and non-memory access modes. In some examples, when the MOD field 1942 has a binary value of 11 (11b), a register-direct addressing mode is utilized, and otherwise a register-indirect addressing mode is used.

The register field 1944 may encode either the destination register operand or a source register operand or may encode an opcode extension and not be used to encode any instruction operand. The content of register field 1944, directly or through address generation, specifies the locations of a source or destination operand (either in a register or in memory). In some examples, the register field 1944 is supplemented with an additional bit from a prefix (e.g., prefix 1801) to allow for greater addressing.

The R/M field 1946 may be used to encode an instruction operand that references a memory address or may be used to encode either the destination register operand or a source register operand. Note the R/M field 1946 may be combined with the MOD field 1942 to dictate an addressing mode in some examples.

The SIB byte 1904 includes a scale field 1952, an index field 1954, and a base field 1956 to be used in the generation of an address. The scale field 1952 indicates a scaling factor. The index field 1954 specifies an index register to use. In some examples, the index field 1954 is supplemented with an additional bit from a prefix (e.g., prefix 1801) to allow for greater addressing. The base field 1956 specifies a base register to use. In some examples, the base field 1956 is supplemented with an additional bit from a prefix (e.g., prefix 1801) to allow for greater addressing. In practice, the content of the scale field 1952 allows for the scaling of the content of the index field 1954 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1807 provides this value. Additionally, in some examples, a displacement factor usage is encoded in the MOD field of the addressing information field 1805 that indicates a compressed displacement scheme for which a displacement value is calculated and stored in the displacement field 1807.

In some examples, the immediate value field 1809 specifies an immediate value for the instruction. An immediate value may be encoded as a 1-byte value, a 2-byte value, a 4-byte value, etc.

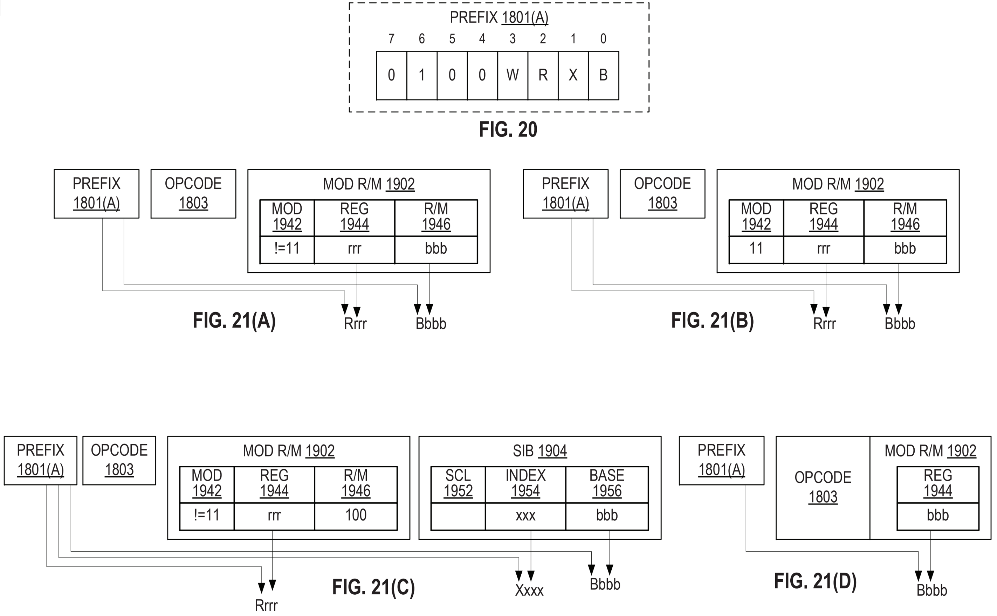

**FIG. 20** illustrates examples of a first prefix 1801(A). In some examples, the first prefix 1801(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1801(A) may specify up to three registers using 3-bit fields depending on the format: 1) using the reg field 1944 and the R/M field 1946 of the MOD R/M byte 1902; 2) using the MOD R/M byte 1902 with the SIB byte 1904 including using the reg field 1944 and the base field 1956 and index field 1954; or 3) using the register field of an opcode.

In the first prefix 1801(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1944 and MOD R/M R/M field 1946 alone can each only address 8 registers.

In the first prefix 1801(A), bit position 2 (R) may be an extension of the MOD R/M reg field 1944 and may be used to modify the MOD R/M reg field 1944 when that field encodes a general-purpose register, a 64-bit packed data register (e.g., a SSE register), or a control or debug register. R is ignored when MOD R/M byte 1902 specifies other registers or defines an extended opcode.

### Bit position 1 (X) may modify the SIB byte index field 1954.

Bit position 0 (B) may modify the base in the MOD R/M R/M field 1946 or the SIB byte base field 1956; or it may modify the opcode register field used for accessing general purpose registers (e.g., general purpose registers 1725).

**FIGS. 21(A)****-(D)** illustrate examples of how the R, X, and B fields of the first prefix 1801(A) are used. FIG. **21(A)** illustrates R and B from the first prefix 1801(A) being used to extend the reg field 1944 and R/M field 1946 of the MOD R/M byte 1902 when the SIB byte 19 04 is not used for memory addressing. **FIG. 21(B)** illustrates R and B from the first prefix 1801(A) being used to extend the reg field 1944 and R/M field 1946 of the MOD R/M byte 1902 when the SIB byte 19 04 is not used (register-register addressing). **FIG. 21(C)** illustrates R, X, and B from the first prefix 1801(A) being used to extend the reg field 1944 of the MOD R/M byte 1902 and the index field 1954 and base field 1956 when the SIB byte 19 04 being used for memory addressing. **FIG. 21(D)** illustrates B from the first prefix 1801(A) being used to extend the reg field 1944 of the MOD R/M byte 1902 when a register is encoded in the opcode 1803.

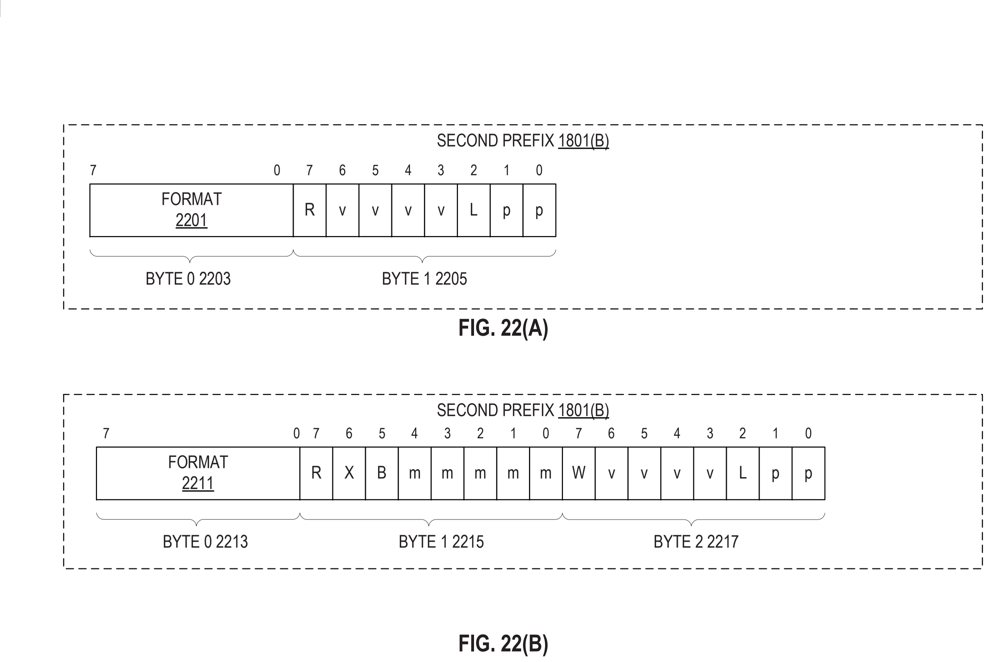

**FIGS. 22(A)****-(B)** illustrate examples of a second prefix 1801(B). In some examples, the second prefix 1801(B) is an example of a VEX prefix. The second prefix 1801(B) encoding allows instructions to have more than two operands, and allows SIMD vector registers (e.g., vector/SIMD registers 1710) to be longer than 64-bits (e.g., 128-bit and 256-bit). The use of the second prefix 1801(B) provides for three-operand (or more) syntax. For example, previous two-operand instructions performed operations such as A = A + B, which overwrites a source operand. The use of the second prefix 1801(B) enables operands to perform nondestructive operations such as A = B + C.

In some examples, the second prefix 1801(B) comes in two forms - a two-byte form and a three-byte form. The two-byte second prefix 1801(B) is used mainly for 128-bit, scalar, and some 256-bit instructions; while the three-byte second prefix 1801(B) provides a compact replacement of the first prefix 1801(A) and 3-byte opcode instructions.

**FIG. 22(A)** illustrates examples of a two-byte form of the second prefix 1801(B). In one example, a format field 2201 (byte 0 2203) contains the value C5H. In one example, byte 1 2205 includes an "R" value in bit[7]. This value is the complement of the "R" value of the first prefix 1801(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1946 to encode the instruction operand that references a memory address or encode either the destination register operand or a source register operand.

Instructions that use this prefix may use the MOD R/M reg field 1944 to encode either the destination register operand or a source register operand, or to be treated as an opcode extension and not used to encode any instruction operand.

For instruction syntax that supports four operands, vvvv, the MOD R/M R/M field 1946 and the MOD R/M reg field 1944 encode three of the four operands. Bits[7:4] of the immediate value field 1809 are then used to encode the third source register operand.

**FIG. 22(B)** illustrates examples of a three-byte form of the second prefix 1801(B). In one example, a format field 2211 (byte 0 2213) contains the value C4H. Byte 1 2215 includes in bits[7:5] "R," "X," and "B" which are the complements of the same values of the first prefix 1801(A). Bits[4:0] of byte 1 2215 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2217 is used like W of the first prefix 1801(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1946 to encode the instruction operand that references a memory address or encode either the destination register operand or a source register operand.

Instructions that use this prefix may use the MOD R/M reg field 1944 to encode either the destination register operand or a source register operand, or to be treated as an opcode extension and not used to encode any instruction operand.

For instruction syntax that supports four operands, vvvv, the MOD R/M R/M field 1946, and the MOD R/M reg field 1944 encode three of the four operands. Bits[7:4] of the immediate value field 1809 are then used to encode the third source register operand.

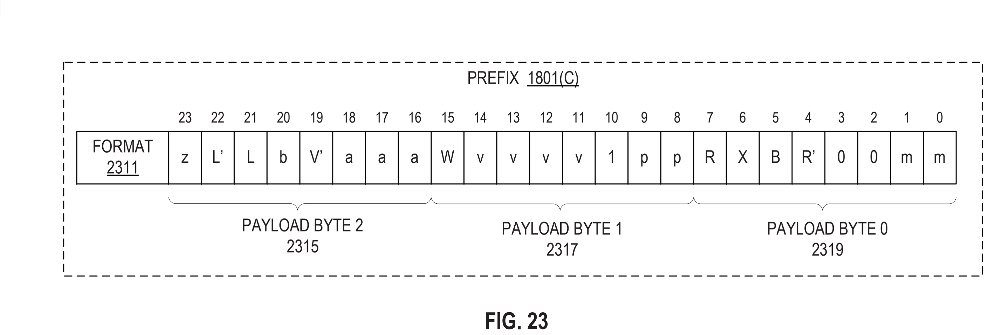

**FIG. 23** illustrates examples of a third prefix 1801(C). In some examples, the third prefix 1801(C) is an example of an EVEX prefix. The third prefix 1801(C) is a four-byte prefix.

The third prefix 1801(C) can encode 32 vector registers (e.g., 128-bit, 256-bit, and 512-bit registers) in 64-bit mode. In some examples, instructions that utilize a writemask/opmask (see discussion of registers in a previous figure, such as **FIG. 17****)** or predication utilize this prefix. Opmask register allows for conditional processing or selection control. Opmask instructions, whose source/destination operands are opmask registers and treat the content of an opmask register as a single value, are encoded using the second prefix 1801(B).

The third prefix 1801(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1801(C) is a format field 2311 that has a value, in one example, of 62H. Subsequent bytes are referred to as payload bytes 2315-2319 and collectively form a 24-bit value of P[23:0] providing specific capability in the form of one or more fields (detailed herein).

In some examples, P[1:0] of payload byte 2319 are identical to the low two mm bits. P[3:2] are reserved in some examples. Bit P[4] (R') allows access to the high 16 vector register set when combined with P[7] and the MOD R/M reg field 1944. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1944 and MOD R/M R/M field 1946. P[9:8] provides opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is like W of the first prefix 1801(A) and second prefix 1811(B) and may serve as an opcode extension bit or operand size promotion.

P[18:16] specify the index of a register in the opmask (writemask) registers (e.g., writemask/predicate registers 1715). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differ across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1801(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors, and/or system features described herein. Such examples may also be referred to as program products.

Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

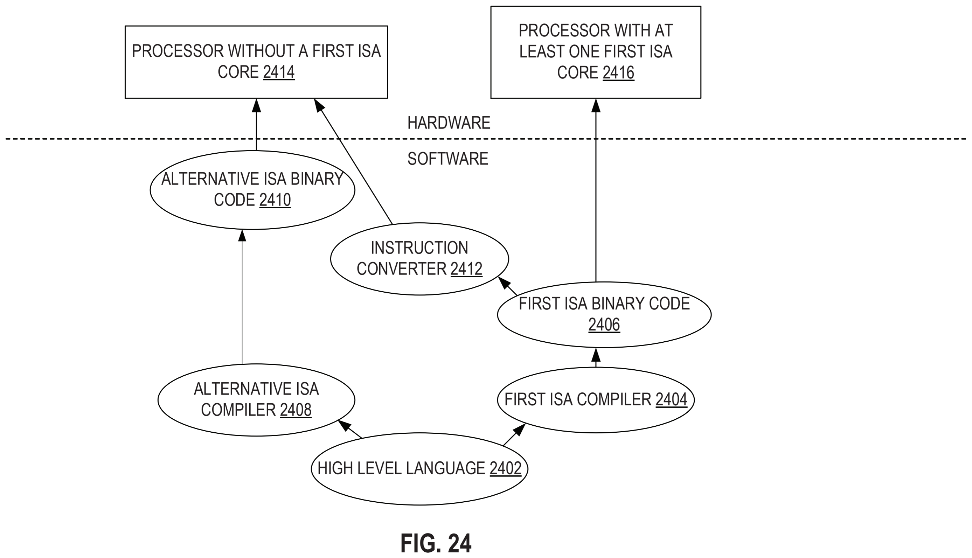

**FIG. 24** is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. **FIG. 24** shows a program in a high-level language 2402 may be compiled using a first ISA compiler 2404 to generate first ISA binary code 2406 that may be natively executed by a processor with at least one first ISA core 2416. The processor with at least one first ISA core 2416 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2404 represents a compiler that is operable to generate the first ISA binary code 2406 (e.g., object code) that can, with or without additional linkage processing, be executed on the processor with at least one first ISA core 2416. Similarly, **FIG. 24** shows the program in the high-level language 2402 may be compiled using an alternative ISA compiler 2408 to generate alternative ISA binary code 2410 that may be natively executed by a processor without a first ISA core 2414. The instruction converter 2412 is used to convert the first ISA binary code 2406 into code that may be natively executed by the processor without a first ISA core 2414. This converted code is not necessarily to be the same as the alternative ISA binary code 2410; however, the converted code will accomplish the general operation and be made up of instructions from the alternative ISA. Thus, the instruction converter 2412 represents software, firmware, hardware, or a combination thereof that, through emulation, simulation, or any other process, allows a processor or other electronic device that does not have a first ISA processor or core to execute the first ISA binary code 2406.

Components, features, and details described for any of **FIGs.** 3-9 and 10A-10B may also optionally apply to any of **FIGs.** 1 and 2. Components, features, and details described for any of the processors disclosed herein (e.g., processor 100) may optionally apply to any of the methods disclosed herein (e.g., method 230), which in embodiments may optionally be performed by and/or with such processors. Any of the processors described herein (e.g., processor 100) in embodiments may optionally be included in any of the systems disclosed herein (e.g., any of the systems of **FIGs.** 13-14). Any of the processors disclosed herein (e.g., processor 100) may optionally have any of the microarchitectures shown herein (e.g., FIGs. 15A, 15B, 16). Any of the instructions disclosed herein may optionally be performed by any of the processors disclosed herein.

References to "one example," "an example," etc., indicate that the example described may include a particular feature, structure, or characteristic, but every example may not necessarily include the particular feature, structure, or characteristic. Moreover, such phrases do not necessarily refer to the same example. Further, when a particular feature, structure, or characteristic is described in connection with an example, it is submitted that it is within the knowledge of one skilled in the art to affect such feature, structure, or characteristic in connection with other examples whether explicitly described.

Processor components disclosed herein may be said and/or claimed to be operative, operable, capable, able, configured adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, yet still co-operate or interact with each other. For example, an execution unit may be coupled with a register and/or a decode unit through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical, or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth to provide a thorough understanding of the embodiments. However, other embodiments may be practiced without some of these specific details. Various modifications and changes may be made thereunto without departing from the broader scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail to avoid obscuring the understanding of the description.

### EXAMPLE EMBODIMENTS

The following examples pertain to further embodiments. Specifics in the examples may be used anywhere in one or more embodiments.

Example 1 is a processor including an instruction pointer storage and a decode unit to decode an indirect control flow transfer instruction. The indirect control flow transfer instruction is to indicate a register that is to store information to indicate an instruction pointer of a target instruction of the indirect control flow transfer instruction or information to indicate a location in memory that is to store information to indicate the instruction pointer. The processor also includes an execution unit coupled with the decode unit. The execution unit to perform operations corresponding to the indirect control flow transfer instruction, including to determine whether at least a first set of bits of an instruction pointer of the indirect control flow transfer instruction are compatible with at least a second set of bits of the instruction pointer of the target instruction. The operations also include to store the instruction pointer of the target instruction in the instruction pointer storage if the first and second sets of bits are determined to be compatible. The operations also include to not store the instruction pointer of the target instruction in the instruction pointer storage if the first and second sets of bits are determined to not be compatible.

Example 2 includes the processor of Example 1, where the execution unit, to determine whether the first and second sets of bits are compatible, is to determine whether the first and second sets of bits are equal.

Example 3 includes the processor of any one of Examples 1 to 2, where the execution unit, to determine whether the first and second sets of bits are compatible, is to determine whether a first result equal to a mask applied to the instruction pointer of the indirect control flow transfer instruction is compatible with a second result equal to a mask applied to the instruction pointer of the target instruction.

Example 4 includes the processor of Example 3, where the first result is to be equal to a logical AND of the mask and the instruction pointer of the indirect control flow transfer instruction. Optionally, where the second result is to be equal to a logical AND of the mask and the instruction pointer of the target instruction. Optionally, where the first and second results are to be compatible when they are equal.

Example 5 includes the processor of any one of Examples 1 to 4, where the indirect control flow transfer instruction is to have an immediate to specify a mask. Optionally, where the first and second sets of bits are to be based on the mask.

Example 6 includes the processor of Example 5, where the immediate has less bits than the mask. Optionally, where at least a single bit of the immediate is to be replicated to generate a plurality of bits of the mask.

Example 7 includes the processor of any one of Examples 1 to 4, further including a register to store a mask. Optionally, where the first and second sets of bits are to be based on the mask.

Example 8 includes the processor of any one of Examples 1 to 7, where the instruction pointer of the indirect control flow transfer instruction includes a first plurality of contiguous least significant bits, a second plurality of contiguous bits immediately more significant than the first plurality of contiguous least significant bits, and a third plurality of contiguous bits immediately more significant than the second plurality of contiguous bits, where the first set of bits includes the third plurality of contiguous bits but not the second plurality of contiguous bits.

Example 9 includes the processor of Example 8, where the instruction pointer of the indirect control flow transfer instruction includes a fourth plurality of contiguous bits immediately more significant than the third plurality of contiguous bits and a fifth plurality of contiguous bits immediately more significant than the fourth plurality of contiguous bits. Optionally, where the first set of bits includes the first plurality of contiguous least significant bits and optionally the fifth plurality of contiguous bits but optionally not the fourth plurality of contiguous bits.

Example 10 includes the processor of Example 8 or Example 9, where the first plurality of contiguous least significant bits includes at least three bits. Optionally, where the second plurality of contiguous bits includes at least four bits. Optionally, where the third plurality of contiguous bits includes at least four bits.

Example 11 includes the processor of any one of Examples 1 to 10, where the first and second sets of bits are to be based on a mask that includes a first plurality of contiguous least significant bits, a second plurality of contiguous bits all having a same first value and immediately more significant than the first plurality of contiguous least significant bits, and a third plurality of contiguous bits all having a same second value and immediately more significant than the second plurality of contiguous bits.

Example 12 includes the processor of Example 11, where the first plurality of contiguous least significant bits all have the same second value. Optionally, where the mask includes a fourth plurality of contiguous bits all having the same first value and immediately more significant than the third plurality of contiguous bits. Optionally, where the mask includes a fifth plurality of contiguous bits all having the same second value and immediately more significant than the fourth plurality of contiguous bits.

Example 13 includes the processor of any one of Examples 1 to 12, where the execution unit is to cause an exceptional condition if the first and second sets of bits are determined to not be compatible.

Example 14 includes the processor of any one of Examples 1 to 13, further including a prediction unit to predict the target instruction of the indirect control flow transfer instruction, and circuitry, of a front-end unit of the processor, to determine whether at least the first set of bits of the instruction pointer of the indirect control flow transfer instruction are compatible with at least the second set of bits of the instruction pointer of the target instruction, and allow speculative execution of the target instruction and one or more instructions immediately after the target instruction in program order if the first and second sets of bits are determined to be compatible or else not allow speculative execution of the target instruction or the one or more instructions if the first and second sets of bits are determined to not be compatible.

Example 15 is a method including decoding an indirect control flow transfer instruction. The indirect control flow transfer instruction indicating a register storing information indicating an instruction pointer of a target instruction of the indirect control flow transfer instruction or information indicating a location in memory storing information to indicate the instruction pointer. The method also includes performing operations corresponding to the indirect control flow transfer instruction, including determining that at least a first set of bits of an instruction pointer of the indirect control flow transfer instruction are not compatible with at least a second set of bits of the instruction pointer of the target instruction. The operations also include causing an exceptional condition based on determining that the first and second sets of bits are not compatible.

Example 16 includes the method of Example 15, where determining that the first and second sets of bits are not compatible includes determining that the first and second sets of bits are not equal.

Example 17 includes the method of any one of Examples 15 or 16, where the first and second sets of bits are to be based on a mask. Optionally, where either the indirect control flow transfer instruction is to have an immediate to specify the mask or the mask is to be stored in a register

Example 18 is a system including a dynamic random access memory (DRAM) and a processor coupled with the DRAM. The processor to receive an indirect control flow transfer instruction. The indirect control flow transfer instruction to indicate a register that is to store information to indicate an instruction pointer of a target instruction of the indirect control flow transfer instruction or information to indicate a location in memory that is to store information to indicate the instruction pointer. The processor is to perform operations corresponding to the indirect control flow transfer instruction, including to determine whether at least a first set of bits of an instruction pointer of the indirect control flow transfer instruction are compatible with at least a second set of bits of the instruction pointer of the target instruction. The operations also include to store the instruction pointer of the target instruction in an instruction pointer storage of the processor if the first and second sets of bits are determined to be compatible or not store the instruction pointer of the target instruction in the instruction pointer storage if the first and second sets of bits are determined to not be compatible.

Example 19 includes the system of Example 18, where the processor, to determine whether the first and second sets of bits are compatible, is to determine whether the first and second sets of bits are equal.

Example 20 includes the system of any one of Examples 18 or 19, where the processor, to determine whether the first and second sets of bits are compatible, is to determine whether a first result equal to a mask applied to the instruction pointer of the indirect control flow transfer instruction is compatible with a second result equal to a mask applied to the instruction pointer of the target instruction.

Example 21 is a processor or other apparatus operative to perform the method of any one of Examples 15 to 17.

Example 22 is a processor or other apparatus that includes means for performing the method of any one of Examples 15 to 17.

Example 23 is a processor or other apparatus that includes any combination of modules and/or units and/or logic and/or circuitry and/or means operative to perform the method of any one of Examples 15 to 17.

Example 24 is an optionally non-transitory and/or tangible machine-readable medium, which optionally stores or otherwise provides instructions including a first instruction, the first instruction if and/or when executed by a processor, computer system, electronic device, or other machine, is operative to cause the machine to perform the method of any one of Examples 15 to 17.

## Claims

1. A processor comprising:
an instruction pointer storage;
a decode unit to decode an indirect control flow transfer instruction, the indirect control flow transfer instruction to indicate a register that is to store information to indicate an instruction pointer of a target instruction of the indirect control flow transfer instruction or information to indicate a location in memory that is to store information to indicate the instruction pointer; and
an execution unit coupled with the decode unit, the execution unit to perform operations corresponding to the indirect control flow transfer instruction, including to:
determine whether at least a first set of bits of an instruction pointer of the indirect control flow transfer instruction are compatible with at least a second set of bits of the instruction pointer of the target instruction; and
store the instruction pointer of the target instruction in the instruction pointer storage if the first and second sets of bits are determined to be compatible; or
not store the instruction pointer of the target instruction in the instruction pointer storage if the first and second sets of bits are determined to not be compatible.

2. The processor of claim 1, wherein the execution unit, to determine whether the first and second sets of bits are compatible, is to determine whether the first and second sets of bits are equal.

3. The processor of claim 1 or claim 2, wherein the execution unit, to determine whether the first and second sets of bits are compatible, is to determine whether a first result equal to a mask applied to the instruction pointer of the indirect control flow transfer instruction is compatible with a second result equal to a mask applied to the instruction pointer of the target instruction.

4. The processor of claim 3, wherein the first result is to be equal to a logical AND of the mask and the instruction pointer of the indirect control flow transfer instruction, wherein the second result is to be equal to a logical AND of the mask and the instruction pointer of the target instruction, and wherein the first and second results are to be compatible when they are equal.

5. The processor of any one of claims 1 to 4, wherein the indirect control flow transfer instruction is to have an immediate to specify a mask, and wherein the first and second sets of bits are to be based on the mask.

6. The processor of claim 5, wherein the immediate has less bits than the mask, and wherein at least a single bit of the immediate is to be replicated to generate a plurality of bits of the mask.

7. The processor of any one of claims 1 to 4, further comprising a register to store a mask, and wherein the first and second sets of bits are to be based on the mask.

8. The processor of any one of claims 1 to 7, wherein the instruction pointer of the indirect control flow transfer instruction includes:
a first plurality of contiguous least significant bits;
a second plurality of contiguous bits immediately more significant than the first plurality of contiguous least significant bits; and
a third plurality of contiguous bits immediately more significant than the second plurality of contiguous bits,
wherein the first set of bits includes the third plurality of contiguous bits but not the second plurality of contiguous bits.

9. The processor of claim 8, wherein the instruction pointer of the indirect control flow transfer instruction includes:
a fourth plurality of contiguous bits immediately more significant than the third plurality of contiguous bits; and
a fifth plurality of contiguous bits immediately more significant than the fourth plurality of contiguous bits,
wherein the first set of bits includes the first plurality of contiguous least significant bits and the fifth plurality of contiguous bits but not the fourth plurality of contiguous bits.

10. The processor of any one of claims 1 to 9, wherein the execution unit is to cause an exceptional condition if the first and second sets of bits are determined to not be compatible.

11. The processor of any one of claims 1 to 10, further comprising:
a prediction unit to predict the target instruction of the indirect control flow transfer instruction; and
circuitry, of a front-end unit of the processor, to:
determine whether at least the first set of bits of the instruction pointer of the indirect control flow transfer instruction are compatible with at least the second set of bits of the instruction pointer of the target instruction; and
allow speculative execution of the target instruction and one or more instructions immediately after the target instruction in program order if the first and second sets of bits are determined to be compatible; or
not allow speculative execution of the target instruction or the one or more instructions if the first and second sets of bits are determined to not be compatible.

12. A method comprising:
decoding an indirect control flow transfer instruction, the indirect control flow transfer instruction indicating a register storing information indicating an instruction pointer of a target instruction of the indirect control flow transfer instruction or information indicating a location in memory storing information to indicate the instruction pointer;
performing operations corresponding to the indirect control flow transfer instruction, including:
determining that at least a first set of bits of an instruction pointer of the indirect control flow transfer instruction are not compatible with at least a second set of bits of the instruction pointer of the target instruction; and
causing an exceptional condition based on determining that the first and second sets of bits are not compatible.

13. The method of claim 12, wherein determining that the first and second sets of bits are not compatible comprises determining that the first and second sets of bits are not equal.

14. The method of any one of claims 12 to 13, wherein the first and second sets of bits are to be based on a mask, and wherein either the indirect control flow transfer instruction is to have an immediate to specify the mask or the mask is to be stored in a register.

15. A computer program comprising instructions which, when the program is executed by a computer, cause the computer to carry out the method of any one of claims 12 to 14.
